# EUROPÄISCHE PATENTSCHRIFT

(11) **EP 1 249 958 B1**
(45) Veröffentlichungstag und Bekanntmachung des Hinweises auf die Patenterteilung: **19.01.2005**
(21) Anmeldenummer: 01440100.4
(22) Anmeldetag: 09.04.2001
(51) Int. Cl.: H04L 1/00

(54) **Verfahren und Vorrichtung zur adaptiven Turbo Dekodierung mehrerer Funkkanäle unter Bestimmung eines CRC am Ende jeder Iteration**
Method and apparatus for adaptive Turbo decoding of a plurality of radio channels performing CRC at the end of each iteration
Méthode et appareil pour le décodage adaptif Turbo de plusieurs canaux radio en effectuant un contrôl CRC à la fin de chaque itération

(43) Veröffentlichungstag der Anmeldung: 16.10.2002
(73) Patentinhaber: ALCATEL, 75008 Paris (FR)
(72) Erfinder: Buné, Paul, 70806 Kornwestheim (DE)
(74) Vertreter: Rausch, Gabriele, Dr.

(56) Entgegenhaltungen:
- EP-A- 0 973 292
- YUE C-W ET AL: "ON THE FER PERFORMANCE AND DECODING COMPLEXITY OF TURBO CODES" 1999 IEEE 49TH. VEHICULAR TECHNOLOGY CONFERENCE. HOUSTON, TX, MAY 16 - 20, 1999, IEEE VEHICULAR TECHNOLOGY CONFERENCE, NEW YORK, NY: IEEE, US, Bd. 3 CONF. 49, 16. Mai 1999 (1999-05-16), Seiten 2214-2218, XP000936204 ISBN: 0-7803-5566-0
- SHIBUTANI A ET AL: "COMPLEXITY REDUCTION OF TURBO DECODING" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, Bd. 3 CONF. 50, 19. September 1999 (1999-09-19), Seiten 1570-1574, XP000922371 ISBN: 0-7803-5436-2
- AMBROZE A ET AL: "Practical aspects of iterative decoding" IEE PROCEEDINGS: COMMUNICATIONS, INSTITUTION OF ELECTRICAL ENGINEERS, GB, Bd. 147, Nr. 2, 14. April 2000 (2000-04-14), Seiten 69-74, XP006013962 ISSN: 1350-2425

## Beschreibung

Die vorliegende Erfindung betrifft ein iteratives Verfahren zum Dekodieren von in Datenrahmen über verschiedene Kanäle übertragenen Empfangssignalen mittels eines digitalen Signalprozessors. Dabei sind dem digitalen Signalprozessor mehrere Kanäle zugeordnet. Beginnend bei einem ersten Kanal wird die Qualität eines über den ersten Kanal übertragenen dekodierten Signals überprüft und der digitale Signalprozessor auf mindestens einen weiteren Kanal umgeschaltet, falls eine vorgebbare Umschaltbedingung erfüllt ist.

Die Erfindung betrifft außerdem eine Vorrichtung zum Dekodieren von in Datenrahmen über verschiedene Kanäle übertragenen Empfangssignalen mittels eines iteratives Verfahrens. Die Dekodierungsvorrichtung umfasst einen digitalen Signalprozessor, dem mehrere Kanäle zugeordnet sind, und Mittel, die beginnend bei einem ersten Kanal die Qualität eines über den ersten Kanal übertragenen dekodierten Signals überprüfen und den digitalen Signalprozessor auf mindestens einen weiteren Kanal umschalten, falls eine vorgebbare Umschaltbedingung erfüllt ist.

Des weiteren betrifft die vorliegende Erfindung eine Vorrichtung zum Empfangen von in Datenrahmen über verschiedene Kanäle übertragenen Empfangssignalen. Die Empfangsvorrichtung weist mindestens eine Vorrichtung zum Dekodieren der Empfangssignale mittels eines iterativen Verfahrens auf. Die Dekodierungsvorrichtung umfasst einen digitalen Signalprozessor, dem mehrere Kanäle zugeordnet sind, und Mittel, die beginnend bei einem ersten Kanal die Qualität eines über den ersten Kanal übertragenen dekodierten Signals überprüfen und den digitalen Signalprozessor auf mindestens einen weiteren Kanal umschalten, falls eine vorgebbare Umschaltbedingung erfüllt ist.

Die Erfindung betrifft auch eine Basisstation eines Funktelekommunikationssystems. Die Basisstation weist eine Vorrichtung zum Empfangen von in Datenrahmen über verschiedene Kanäle übertragenen Empfangssignalen mit mindestens einer Vorrichtung zum Dekodieren der Empfangssignale mittels eines iterativen Verfahrens auf. Die Dekodierungsvorrichtung umfasst einen digitalen Signalprozessor, dem mehrere Kanäle zugeordnet sind, und Mittel, die beginnend bei einem ersten Kanal die Qualität eines über den ersten Kanal übertragenen dekodierten Signals überprüfen und den digitalen Signalprozessor auf mindestens einen weiteren Kanal umschalten, falls eine vorgebbare Umschaltbedingung erfüllt ist.

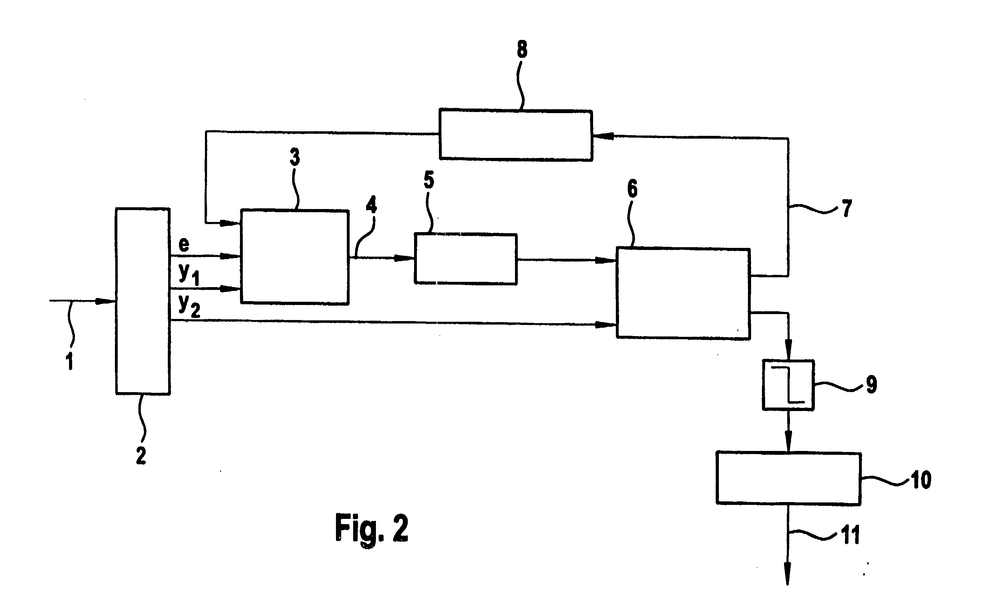

Schließlich betrifft die vorliegende Erfindung ein Funktelekommunikationssystem mit einer Vielzahl von mobilen Funkeinheiten, mit mehreren Basisstationen, die in einem Funkkontakt mit den mobilen Funkeinheiten stehen, und mit mindestens einer Steuerungsvorrichtung zum Steuern des Funktelekommunikationssystems, die mit den Basisstationen in Verbindung steht. Die Basisstationen weisen eine Vorrichtung zum Empfangen von in Datenrahmen über verschiedene Kanäle übertragenen Empfangssignalen mit mindestens einer Vorrichtung zum Dekodieren der Empfangssignale mittels eines iterativen Verfahrens auf. Die Dekodierungsvorrichtung umfasst einen digitalen Signalprozessor, dem mehrere Kanäle zugeordnet sind, und Mittel, die beginnend bei einem ersten Kanal die Qualität eines über den ersten Kanal übertragenen dekodierten Signals überprüfen und den digitalen Signalprozessor auf mindestens einen weiteren Kanal umschalten, falls eine vorgebbare Umschaltbedingung erfüllt ist. Dekodierverfahren der eingangs genannten Art werden im Stand der Technik bspw. in Dekodierungsvorrichtungen von Basisstationen von Funktelekommunikationssystemen eingesetzt. Ein Blockdiagramm eines bekannten sogenannten Turbo-Dekodierers, wie er bspw. zur Dekodierung eines Kanals in einem Node B von UMTS-Funktelekommunikationssystemen eingesetzt wird, ist in Figur 2 dargestellt. Nähere Informationen zu dem bekannten Turbo-Dekodierer können der 3-GPP (3rd Generation Partnership Project)-Spezifikation 25.212 V.3.4.0 entnommen werden, auf die ausdrücklich Bezug genommen wird. Ein an dem Turbo-Dekodierer anliegendes Empfangssignal ist mit dem Bezugszeichen 1 bezeichnet. Das Eingangssignal wird in Datenrahmen nach einem CDMA (Code Division Multiple Access)-Verfahren übertragen. Es wird zunächst an eine sogenannte Unpuncturing-Einheit 2 geführt, die das in den Datenrahmen übertragene Empfangssignal 1 an vorgegebene Datenrahmen des Dekodierers anpasst. Dies geschieht bspw. durch Hinzufügen von im Rahmen der Datenübertragung weggelassener Bits. Die hinzugefügten Bits haben die Amplitude 0. Sie werden im Rahmen der Dekodierung wie Bits mit einer geringen Zuverlässigkeit behandelt und der Amplitude entsprechend niedrig gewichtet. Das Unpuncturing ist Teil eines sogenannten Rate Matching. An der Unpuncturing-Einheit 2 liegen ein Ausgangssignal e und zwei Redundanzsignale y₁, y₂ zur Fehlerkorrektur an.

Das Ausgangssignal e und das erste Redundanzsignal y₁ wird an einen ersten konstituierenden Dekodierer 3 (sog. constituent decoder) mit einem sogenannten Soft Output am Ausgang 4 geführt. Ein Soft Output bedeutet, dass statt wie beim sogenannten Hard Output, wo am Ausgang nur +1, -1 (physische Bits) bzw. 0, 1 (logische Bits) anliegen, am Ausgang 4 die ganze Bandbreite reeller Zahlen anliegen kann. Dadurch werden Fehler bei der Dekodierung eines gestört übertragenen Empfangssignals vermindert. Beim Soft Output haben die Bits eine ihrer Zuverlässigkeit entsprechende unterschiedliche Amplitude und werden ihrer Amplitude entsprechend gewichtet. Als konstituierende Dekodierer finden typischerweise Dokodierer vom Typ MAP (Maximum A Posteriori) oder z.B. vom Typ LogMAP, MaxLogMAP, SOVA oder Viterbi Verwendung.

Der Ausgang 4 des Dekodierers 3 wird an eine Interleave-Einheit 5 geführt, die die Bits innerhalb der Datenrahmen umsortiert, so dass ursprünglich benachbarte Bits möglichst weit voneinander entfernt sind. Dabei wird davon ausgegangen, dass sich Fehler bei der Übertragung des Empfangssignals nicht nur auf einzelne Bits, sondern in der Regel auf eine Vielzahl aufeinanderfolgender Bits auswirken. Während die Dekodierung eines Datenrahmens mit vereinzelt auftretenden fehlerhaften Bits relativ problemlos möglich ist, ist eine Dekodierung eines Datenrahmens mit einer Vielzahl aufeinanderfolgender fehlerhafter Bits sehr aufwendig bzw. sogar unmöglich. Aus diesem Grund werden die Bits von der Interleave-Einheit 5 umsortiert, um trotz eines gehäuft auftretenden Übertragungsfehlers, der sich auf eine Vielzahl aufeinanderfolgender Bits auswirkt, einen Datenrahmen mit lediglich vereinzelt angeordneten fehlerhaften Bits zu generieren, die gut dekodierbar sind.

Der Ausgang der Interleave-Einheit 5 wird zusammen mit dem zweiten Redundanzsignal y₂ an einen zweiten konstituierenden Dekodierer 6 geführt. Dieser entspricht vom Aufbau her dem ersten konstituierenden Dekodierer 3. Nach dem Stand der Technik wird der Ausgang des zweiten konstituierenden Dekodierers 6 regelmäßig acht mal über eine Rückführung 7 und eine darin angeordnete De-Interleave-Einheit 8 zurück an den Eingang des ersten konstituierenden Dekodierers 3 geführt. Nach erfolgten acht Iterationen wird der Ausgang des zweiten konstituierenden Dekodierers 6 über einen Schwellwertdetektor 9 und eine weitere De-Interleave-Einheit 10 ausgegeben. Der Ausgang 11 der weiteren De-Interleave-Einheit 10 stellt das dekodierte Signal (die sogenannten estimated hard bits) dar.

Für eine Turbo-Dekodierung mit acht Iterationen eines Empfangssignals, das über einen 384 kBit/s-Datenkanal übertragen wird, ist eine Rechenleistung von 78 x 10⁶ Instruktionen/s (78 Mips) erforderlich. Bei einer Taktrate von 180 Hz und einer 60%-igen Auslastung kann ein herkömmlicher digitaler Signalprozessor (DSP) vom Typ TigerSHARC etwa 108 x 10⁶ Instruktionen/s (108 Mips) zur Verfügung stellen. Somit kann nach dem Stand der Technik maximal ein 384 kBit/s-Datenkanal durch einen DSP dekodiert werden.

Ein Dekodierungsverfahren der eingangs genannten Art ist bspw. aus der EP 0 973 292 A2 bekannt. Bei dem dort beschriebenen Verfahren ist jedoch die Anzahl der zur Decodierung des Signals erforderlichen Iterationen variabel. Die Anzahl der erforderlichen Iterationen wird anhand eines vor der eigentlichen Decodierung ermittelten Fehlergrads des Signals ermittelt.

Aus Yue C.-W. et al.: "On the FER Performance and Decoding Complexity of Turbo Codes", 1999 IEEE 49th Vehicular Technology Conference , Houston, TX, 16. - 20. Mai 1999, New York, NY: IEEE, US, Bd. 3, Conf. 49, 16. Mai 1999, Seiten 2214 - 2218, XP000936204, ISBN 0-7803-5566-0 ist ein Verfahren zum Dekodieren von in Datenrahmen über verschiedene Kanäle übertragenen Empfangssignalen mittels eines iterativen Verfahrens bekannt. Allerdings wird dort kein Hinweis gegeben, einen bestimmten Kanal nach einem bestimmten Auswahlkriterium abhängig von den Übertragungseigenschaften der Signale über die Kanäle als den ersten Kanal heranzuziehen. Der erste Kanal wird vielmehr rein zufällig oder nach einer festen Vorgabe herangezogen.

Der vorliegenden Erfindung liegt die Aufgabe zugrunde, die Belastung eines digitalen Signalprozessors zum Dekodieren von in Datenrahmen übertragenen Empfangssignalen zu reduzieren und die zur Verfügung stehende Rechnerleistung optimal zu nutzen, und insbesondere ein iteratives Dekodierverfahren möglichst effizient zu gestalten.

Zur Lösung dieser Aufgabe schlägt die Erfindung, ausgehend von dem iterativen Verfahren zum Dekodieren eines in Datenrahmen übertragenen Empfangssignals vor, dass die Qualität eines über den ersten Kanal übertragenen dekodierten Signals im Anschluss an jede Iteration überprüft wird und aus einer vorgebbaren Anzahl an Kanälen als erster Kanal derjenige Kanal ausgewählt wird, über den das Signal mit der besten Güte übertragen wird.

Erfindungsgemäß wird also vorgeschlagen, bei einem iterativen Dekodierungsverfahren nicht immer eine vorgegebene Anzahl an Iterationen auszuführen. Falls das dekodierte Signal bereits nach weniger als der vorgegebenen Anzahl an Iterationen eine vorgebbare Qualität aufweist, wird das Verfahren zum Dekodieren des in einem Datenrahmen enthaltenen Teils des Empfangssignals erfindungsgemäß bereits abgebrochen, bevor sämtliche vorgegebenen Iterationen durchlaufen sind. Mit dem erfindungsgemäßen Verfahren kann die Belastung von digitalen Signalprozessoren (DSPs) für die Dekodierung von im Datenrahmen übertragenen Empfangssignalen beträchtlich verringert werden. Versuche in einem UMTS-Funktelekommunikationssystem haben gezeigt, dass bei einer angenommenen mittleren Störung des Empfangssignals von etwa 1 dB die Mehrzahl der Datenrahmen bereits nach zwei Iterationen oder weniger fehlerfrei ist, wobei bei einer Datenrahmen-Fehler-Rate (Block Error Rate, BLER) von etwa 1% oder weniger nach acht Iterationen von fehlerfrei gesprochen wird. Bei Turbo-Dekodierern, die in einem Node B eines UMTS-Funktelekommunikationssystems eingesetzt werden, kann mit dem erfindungsgemäßen Verfahren bei einem angenommenen Störungsgrad (Signal-to-Interference-Ratio, SIR) des Empfangssignals von etwa 1 dB die Auslastung der DSPs um etwa 70% reduziert werden.

Die durch das erfindungsgemäße Verfahren deutlich verringerte Auslastung der DSPs hat verschiedene Vorteile. Zum einen können aufgrund der verringerten Auslastung weniger leistungsfähige und damit deutlich kostengünstigere DSPs in einer Dekodierungsvorrichtung eingesetzt werden. Gemäß einem anderen Ansatz können dieselben leistungsfähigen DSPs wie bisher auch eingesetzt werden, wobei die DSPs jedoch zu den Zeiten, zu denen sie keine Dekodierung des Empfangssignals vornehmen, sich also in einem sog. idle-state befinden, mit anderen Aufgaben betraut werden und dadurch andere Prozessoren der Dekodierungsvorrichtung entlasten können.

Mit anderen Worten, kann derselbe DSP zum Dekodieren eines ersten Datenrahmens, der über den ersten Kanal übertragen wird, und mindestens eines weiteren Datenrahmens, der über den mindesten einen weiteren Kanal übertragen wird; eingesetzt werden. Wie viele verschiedene Datenrahmen innerhalb eines betrachteten Zeitraums (sog. Transmission Timing Interval Frame, TTI-Frame) von einem DSP dekodiert werden können, hängt einerseits von der Rechenleistung des DSP und andererseits von der Anzahl der Iterationen ab, die für die Dekodierung vorangegangener Datenrahmen innerhalb desselben TTI-Frames ausgeführt werden müssen.

In diesem Zusammenhang wäre bspw. die Auslegung der Dekodierungsvorrichtung als sogenannte packet machine denkbar, die eine eigene Steuereinheit, einen sogenannten scheduler, aufweist. Der scheduler weist die Dekodierung eines bestimmten Datenrahmens einem DSP der Dekodierungsvorrichtung zu, der sich momentan in einem idle-state befindet. Bei einer als packet machine ausgebildeten Dekodierungsvorrichtung kann die Anzahl der in der Dekodierungsvorrichtung zum Dekodieren von Empfangssignalen vorgesehenen DSPs verringert werden, wobei gleichzeitig die volle Funktionalität der Dekodierungsvorrichtung erhalten bleibt.

Das erfindungsgemäße Verfahren kann bei einem beliebigen Kanal mit der Dekodierung des über diesen Kanal übertragenen Datenrahmens beginnen. Es hat sich jedoch gezeigt, dass die Effektivität der Dekodierung noch einmal deutlich erhöht werden kann, wenn bestimmte Kriterien bei der Auswahl des ersten Kanals beachtet werden. Deshalb wird erfindungsgemäß vorgeschlagen, dass aus einer vorgebbaren Anzahl an Kanälen als erster Kanal derjenige Kanal ausgewählt wird, über den das Signal mit der besten Güte übertragen wird. Dabei wird davon ausgegangen, dass die Dekodierung eines solchen Signals mit einer hohen Güte nur sehr wenige Iterationen erfordert, bis das dekodierte Signal die vorgebbare Qualität aufweist. Die innerhalb des TTI-Frames verbleibende relativ lange Rechenzeit des DSP kann dann voll zur Dekodierung eines über einen weiteren Kanal übertragenen Datenrähmens herangezogen werden. Die Wahrscheinlichkeit einer erfolgreichen Dekodierung des weiteren Datenrahmens ist relativ hoch, selbst wenn dieser stark gestört ist und relativ viele Iterationen zur Dekodierung erfordert, da aufgrund der schnellen Dekodierung des ersten Datenrahmens innerhalb des TTI-Frames in dem DSP noch eine große Rechenkapazität zur Verfügung steht.

Es ist denkbar, die Güte der Signale der vorgegebenen Anzahl an Kanälen anhand einer Analyse der Amplitudenvariationen am Eingang der Dekodierungsvorrichtung zu ermitteln. Gemäß einer bevorzugten Ausführungsform der Erfindung wird vorgeschlagen, dass die Güte der Signale der vorgebbaren Anzahl an Kanälen anhand eines Signal-zu-Rausch-Abstandes (Signal-to-Interference-Ratio, SIR) der Signale ermittelt wird.

Gemäß einer vorteilhaften Weiterbildung der vorliegenden Erfindung wird vorgeschlagen, dass der digitale Signalprozessor auf den mindestens einen weiteren Kanal umgeschaltet wird, falls das über den betrachteten Kanal übertragene dekodierte Signal eine vorgebbare Qualität aufweist. Die vorgebbare Umschaltbedingung kann bspw. gegeben sein, falls das über den betrachteten Kanal übertragene dekodierte Signal eine vorgebbare Qualität aufweist. In diesem Fall wird gemäß einer Weiterbildung der vorliegenden Erfindung vorgeschlagen, dass auf den mindestens einen weiteren Kanal umgeschaltet wird. Dadurch kann derselbe DSP zum Dekodieren eines ersten Datenrahmens, der über den ersten Kanal übertragen wird, und mindestens eines weiteren Datenrahmens, der über den mindesten einen weiteren Kanal übertragen wird, eingesetzt werden. Wie viele verschiedene Datenrahmen innerhalb eines betrachteten Zeitraums (sog. Transmission Timing Interval Frame, TTI-Frame) von einem DSP dekodiert werden können hängt einerseits von der Rechenleistung des DSP und andererseits von der Anzahl der Iterationen ab, die für die Dekodierung vorangegangener Datenrahmen innerhalb desselben TTI-Frames ausgeführt werden müssen.

Gemäß einer bevorzugten Ausführungsform der vorliegenden Erfindung wird vorgeschlagen, dass für jeden dekodierten Datenrahmen des betrachteten Kanals im Anschluss an jede Iteration ein Cyclic Redundancy Check (CRC) ausgeführt und auf den mindestens einen weiteren Kanal umgeschaltet wird, falls der über den betrachteten Kanal übertragene dekodierte Datenrahmen fehlerfrei ist. Vorteilhafterweise wird auf einen weiteren Kanal umgeschaltet, obwohl das über den betrachteten Kanal übertragene dekodierte Signal die vorgebbare Qualität nicht aufweist, falls für einen Datenrahmen des betrachteten Kanals eine vorgebbare erste Anzahl an Iterationen ausgeführt wurde. Wenn bspw. zur Dekodierung eines über einen bestimmten Kanal übertragenen Datenrahmens maximal acht Iterationen vorgesehen sind, wird das Verfahren nach acht erfolglosen Iterationen abgebrochen. Dieser Abbruch der Dekodierung des über den betrachteten Kanal übertragenen Datenrahmens verhindert eine übermäßige Rechenbelastung des DSP, bspw. bei einer besonders starken Störung des Eingangssignals, und erlaubt es, auf dem DSP innerhalb des TTI-Frames noch verbleibende Rechenkapazitäten zur Dekodierung von über weitere Kanäle übertragenen Datenrahmen zu nutzen. Der Abbruch der Dekodierung für den über den betrachteten Kanal übertragenen Datenrahmen bedeutet, dass dieser Datenrahmen entweder gar nicht dekodiert werden kann, weil er bspw. im Rahmen der Funkübertragung über das sog. Shannon-Theorem hinaus gestört worden ist, oder nicht mit vertretbarem Aufwand dekodierbar ist. Das Shannon-Theorem stellt eine Obergrenze für den Grad der Störung eines Signals dar, bei dem theoretisch gerade noch eine Entstörung des Signals möglich ist.

Statt erst einen Kanal mit mehreren aufeinanderfolgenden Iterationen zu dekodieren und erst danach auf weitere Kanäle umzuschalten, um diese wiederum jeweils einzeln in aufeinanderfolgenden Iterationen zu dekodieren, ist es auch denkbar, nach jeder Iteration auf einen weiteren Kanal einer Gruppe von Kanälen umzuschalten und die Dekodierung eines Kanals abzubrechen, falls das über den betrachteten Kanal übertragene dekodierte Signal eine vorgebbare Qualität aufweist. Dann wird nur noch zwischen den verbleibenden Kanälen der Gruppe umgeschaltet.

Dem gemäß wird als eine weitere vorteilhafte Weiterbildung der vorliegenden Erfindung vorgeschlagen, dass beginnend bei einem ersten Kanal im Anschluss an eine Iteration zyklisch jeweils für eine bestimmte Anzahl an Iterationen so lange zwischen dem ersten Kanal und mindestens einem weiteren Kanal umgeschaltet wird, bis das über den betrachteten Kanal übertragene dekodierte Signal eine vorgebbare Qualität aufweist.

Gemäß einer weiteren bevorzugten Ausführungsform der Erfindung wird vorgeschlagen, dass für jeden dekodierten Datenrahmen des betrachteten Kanals im Anschluss an jede Iteration ein Cyclic Redundancy Check (CRC) ausgeführt und so lange zwischen dem ersten Kanal und dem mindestens einen weiteren Kanal umgeschaltet wird, bis der über den betrachteten Kanal übertragene dekodierte Datenrahmen fehlerfrei ist.

Vorzugsweise wird im Anschluss an jede Iteration zyklisch jeweils für eine Iteration zwischen dem ersten und dem mindestens einen weiteren Kanal umgeschaltet.

Gemäß noch einer weiteren bevorzugten Ausführungsform der vorliegenden Erfindung wird vorgeschlagen, dass das Verfahren abgebrochen wird, falls das über einen vorgebbaren weiteren Kanal übertragene dekodierte Signal eine vorgebbare Qualität aufweist. Wenn ein DSP bspw. zur Dekodierung von maximal fünf Kanälen herangezogen wird, wird das Dekodierungsverfahren abgebrochen, wenn auch der über den fünften Kanal übertragene Datenrahmen fehlerfrei ist. Danach befindet sich der DSP im idle-state und steht für andere Berechnungen zur Verfügung.

. Vorteilhafterweise wird das Verfahren abgebrochen, obwohl das über dem betrachteten Kanal übertragene dekodierte Signal die vorgebbare Qualität nicht aufweist, falls für die Datenrahmen des ersten und der weiteren Kanäle insgesamt eine vorgebbare zweite Anzahl an Iterationen ausgeführt wurde. Wenn zur Dekodierung von über verschiedene Kanäle übertragenen Datenrahmen innerhalb eines TTI-Frames insgesamt maximal zehn Iterationen zur Verfügung stehen, wird das Verfahren nach zehn Iterationen abgebrochen, wobei bspw. der Datenrahmen eines ersten Kanals nach sechs Iterationen erfolgreich dekodiert worden ist, die innerhalb des TTI-Frames verbleibenden vier Iterationen zur Dekodierung eines weiteren Datenrahmens jedoch nicht ausgereicht haben.

Gemäß einer weiteren bevorzugten Ausführungsform der Erfindung wird vorgeschlagen, dass die Güte der Signale der vorgebbaren Anzahl an Kanälen anhand einer Bitfehlerrate von Bits in einem Steuerkanal der Signale ermittelt wird. Vorzugsweise wird die Güte der Signale der vorgebbaren Anzahl an Kanälen anhand einer Bitfehlerrate von Pilot Bits in einem Dedicated Physical Control Channel (DPCCH) der Signale ermittelt. Ein Datenkanal eines UMTS-Funktelekommunikationssystems wird als Data Channel (DCH) bezeichnet. Der DCH umfasst einen Dedicated Physical Data Channel (DPDCH) und den Dedicated Physical Control Channel (DPCCH). Dabei handelt es sich um die einzelnen den Endgeräten zugeordneten Kanäle. Der DPDCH ist noch einmal unterteilt in einen Dedicated Traffic Channel (DTCH) und einen Dedicated Control Channel (DCCH). Der DPDCH wird etwa einmal alle 20 bis 40 msec übertragen. In dem DPCCH sind die Pilot Bits zur Synchronisation und weitere Bits enthalten. Der DPCCH wird ca. 1.500 mal pro Sekunde übertragen. Die Pilot Bits sind ein deutliches Indiz für die Güte der Übertragungssignale.

Als noch eine weitere Lösung der Aufgabe der vorliegenden Erfindung wird ausgehend von der Vorrichtung zum Dekodieren von Eingangssignalen mittels eines iterativen Verfahrens vorgeschlagen, dass die Dekodierungsvorrichtung derart ausgestaltet ist, dass sie die Qualität eines über den ersten Kanal übertragenen dekodierten Signals im Anschluss an jede Iteration überprüft und aus einer vorgebbaren Anzahl an Kanälen als ersten Kanal denjenigen Kanal auswählt, über den das Signal mit der besten Güte übertragen wird.

Gemäß einer vorteilhaften Weiterbildung der vorliegenden Erfindung wird vorgeschlagen, dass die Dekodierungsvorrichtung mindestens zwei in Reihe geschaltete konstituierende Dekodierer, jeweils eine zwischen den zwei konstituierenden Dekodierern angeordnete Interleave-Einheit, eine Rückführung eines Ausgangs des letzten konstituierenden Dekodierers an einen Eingang des ersten konstituierenden Dekodierers und eine in der Rückführung angeordnete De-Interleave-Einheit aufweist. Eine derartige Dekodierungsvorrichtung wird als Turbo-Dekodierer bezeichnet und wird insbesondere in einer Empfangsvorrichtung in einem Node B eines UMTS-Funktelekommunikationssystems eingesetzt.

Als eine weitere Lösung der Aufgabe der vorliegenden Erfindung wird ausgehend von der Vorrichtung zum Empfangen von in Datenrahmen übertragenen Empfangssignalen der eingangs genannten Art vorgeschlagen, dass die Dekodierungsvorrichtung derart ausgestaltet ist, dass sie die Qualität eines über den ersten Kanal übertragenen dekodierten Signals im Anschluss an jede Iteration überprüft und aus einer vorgebbaren Anzahl an Kanälen als ersten Kanal denjenigen Kanal auswählt, über den das Signal mit der besten Güte übertragen wird. Eine solche Empfangsvorrichtung ist bei einem UMTS-Funktelekommunikationssystem in einem Node B zum Empfangen von Signalen der mobilen Funkeinheiten (sog. uplink) vorhanden.

Als noch eine weitere Lösung der Aufgabe der vorliegenden Erfindung wird ausgehend von der Basisstation eines Funktelekommunikationssystems der eingangs genannten Art vorgeschlagen, dass die Dekodierungsvorrichtung derart ausgestaltet ist, dass sie die Qualität eines über den ersten Kanal übertragenen dekodierten Signals im Anschluss an jede Iteration überprüft und aus einer vorgebbaren Anzahl an Kanälen als ersten Kanal denjenigen Kanal auswählt, über den das Signal mit der besten Güte übertragen wird. Eine solche Basisstation wird in einem UMTS-Funktelekommunikationssystem als Node B bezeichnet.

Schließlich wird als eine Lösung der Aufgabe der vorliegenden Erfindung ausgehend von dem Funktelekommunikationssystem der eingangs genannten Art vorgeschlagen, dass die Dekodierungsvorrichtung derart ausgestaltet ist, dass sie die Qualität eines über den ersten Kanal übertragenen dekodierten Signals im Anschluss an jede Iteration überprüft und aus einer vorgebbaren Anzahl an Kanälen als ersten Kanal denjenigen Kanal auswählt, über den das Signal mit der besten Güte übertragen wird. Die mobilen Funkeinheiten des Funktelekommunikationssystems sind bspw. als Mobiltelefone ausgebildet. In einem UMTS-Funktelekommunikationssystem werden die Basisstationen als Node B und die Steuerungsvorrichtung als Radio Network Controller (RNC) bezeichnet.

Gemäß einer vorteilhaften Weiterbildung der vorliegenden Erfindung wird vorgeschlagen, dass eine mobile Funkeinheit mit mehreren Basisstationen in Funkkontakt steht, die Basisstationen, die in Funkkontakt mit der mobilen Funkeinheit stehen, Mittel zum Übertragen der Güte der Funkverbindung an die Steuerungsvorrichtung aufweisen, die Steuerungsvorrichtung Mittel zum Übertragen von Informationen über die Güte der Funkverbindungen an die Basisstationen aufweist. Der Zustand, in dem eine mobile Funkeinheit mit mehreren Basisstationen in Funkkontakt steht, wird auch als Soft-Handover bezeichnet. Dadurch dass in den einzelnen Basisstationen die Informationen über die Güte der Funkverbindungen zu sämtlichen Basisstationen, mit denen die mobile Funkeinheit in Funkkontakt steht, zur Verfügung stehen, weiß jede einzelne Basisstation, ob die Funkverbindung, mit der sie mit der mobilen Funkeinheit in Funkkontakt steht, eher gut oder eher schlecht ist. Diese Informationen können dann in den einzelnen Basisstationen im Rahmen der Ausführung des erfindungsgemäßen Verfahrens an verschiedenen Stellen verwendet werden. So kann eine Basisstation bspw. wenn sie weiß, dass sie die Funkverbindung mit der besten Güte zu der mobilen Funkeinheit unterhält, das über die Funkverbindung von der mobilen Funkeinheit empfangene Signal mit höherer Priorität dekodieren. Ebenso kann eine Basisstation, die eine Funkverbindung von eher schlechter Güte zu der mobilen Funkeinheit unterhält, die Dekodierung des Funksignals mit einer eher niederen Priorität behandeln.

Die Basisstationen sind derart ausgestaltet, dass sie die Informationen über die Güte der Funkverbindungen zur Auswahl des ersten Kanals aus der vorgebbaren Anzahl an Kanälen heranziehen. Die Funkverbindung, über die das Empfangssignal mit einer besonders hohen Güte übertragen wird, wird also mit der höchsten Priorität dekodiert. Wenn der DSP danach noch Rechenkapazität frei hat, können niederpriore Empfangssignale dekodiert werden.

Gemäß einer bevorzugten Ausführungsform der vorliegenden Erfindung wird vorgeschlagen, dass die Basisstationen derart ausgestaltet sind, dass sie die Informationen über die Güte der Funkverbindung zur Auswahl des mindestens einen weiteren Kanals aus der vorgebbaren Anzahl an Kanälen heranziehen.

Gemäß einer weiteren bevorzugten Ausführungsform der vorliegenden Erfindung wird vorgeschlagen, dass die Basisstationen derart ausgestaltet sind, dass sie die Informationen über die Güte der Funkverbindungen zur Auswahl der Reihenfolge der weiteren Kanäle aus der vorgebbaren Anzahl an Kanälen heranziehen.

Gemäß noch einer weiteren bevorzugten Ausführungsform der vorliegenden Erfindung wird vorgeschlagen, dass die Basisstationen derart ausgestaltet sind, dass sie die Informationen über die Güte der Funkverbindungen zur Auswahl des Zeitpunkts eines Wechsels zu einem weiteren Kanal heranziehen. Schließlich wird gemäß noch einer weiteren bevorzugten Ausführungsform der Erfindung vorgeschlagen, dass die Basisstationen derart ausgestaltet sind, dass sie die Informationen über die Güte der Funkverbindungen zur Auswahl des Zeitpunkts eines Abbruchs des Verfahrens heranziehen.

Weitere Merkmale, Anwendungsmöglichkeiten und Vorteile der Erfindung ergeben sich aus der nachfolgenden Beschreibung der Ausführungsbeispiele der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Blockdiagramm einer erfindungsgemäßen Dekodierungsvorrichtung;
- Figur 2: ein Blockdiagramm einer aus dem Stand der Technik bekannten Dekodierungsvorrichtung;
- Figur 3: ein Blockdiagramm eines erfindungsgemäßen Funktelekommunikationssystems;
- Figur 4: ein Ablaufdiagramm eines erfindungsgemäßen Dekodierungsverfahrens;
- Figur 5: ein erfindungsgemäßes Verfahren gemäß einer ersten bevorzugten Ausführungsform;
- Figur 6: ein erfindungsgemäßes Verfahren gemäß einer zweiten bevorzugten Ausführungsform; und
- Figur 7: ein erfindungsgemäßes Verfahren gemäß einer dritten bevorzugten Ausführungsform.

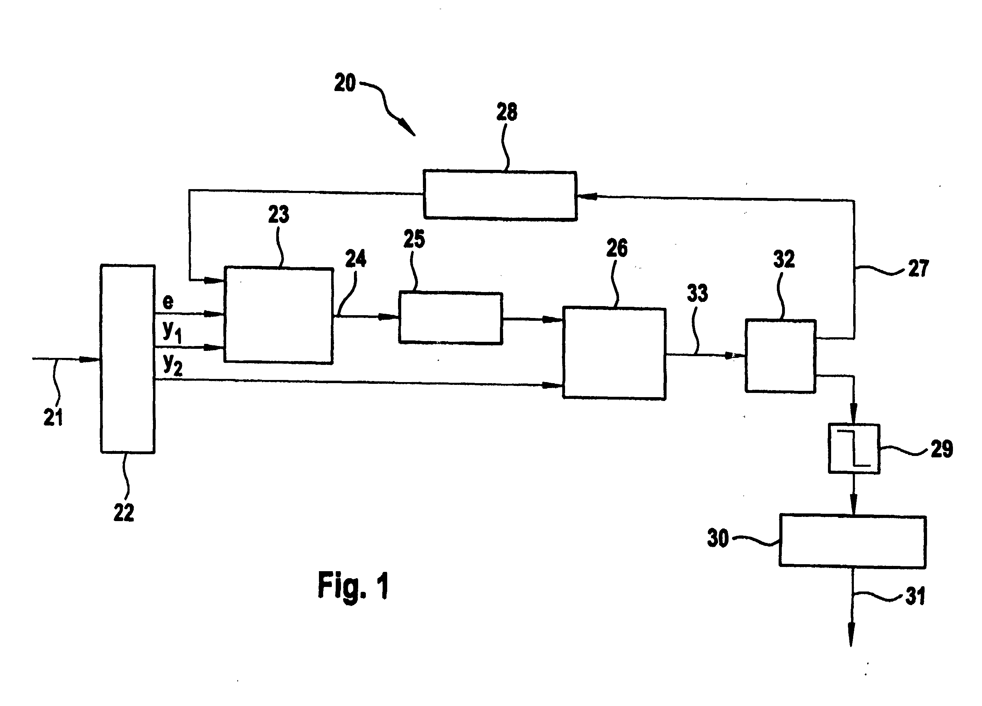

In Figur 1 ist ein Blockdiagramm einer erfindungsgemäßen Dekodierungsvorrichtung gemäß einer bevorzugten Ausführungsform dargestellt. Die Dekodierungsvorrichtung ist in ihrer Gesamtheit mit dem Bezugszeichen 20 bezeichnet. Ein in Datenrahmen übertragenes an der Dekodierungsvorrichtung 20 anliegendes Eingangssignal ist mit dem Bezugszeichen 21 bezeichnet. Das Eingangssignal 21 ist bspw. ein uplink-Signal von einer mobilen Funkeinheit eines Funktelekommunikationssystems, das in einer Basisstation des Funktelekommunikationssystems empfangen wird. Das Eingangssignal 21 liegt an einer Unpuncturing- und Demultiplexing-Einheit 22 an, die ein Ausgangssignal e und zwei Redundanzsignale y₁, y₂ zur Fehlerkorrektur erzeugt. Das Ausgangssignal e und das erste Redundanzsignal y₁ liegen an einem ersten konstituierenden Dekodierer 23 an, der bspw. als Viterbi Dekodierer ausgebildet ist. Er kann jedoch auch als sog. MAP-, Log-MAP-, MaxLogMAP-Dekodierer ausgebildet sein. Ein Ausgang 24 des ersten Dekodierers 23 ist an eine Interleave-Einheit 25 geführt. Ein Ausgang der Interleave-Einheit 25 und das zweite Redundanzsignal y₂ sind an den Eingang eines zweiten konstituierenden Dekodierers 26 geführt, der z.B. als ein Viterbi Dekodierer ausgebildet ist. Ein dekodiertes Signal 33 wird über eine Rückführung 27 und eine darin angeordnete De-Interleave-Einheit 28 wieder zurück an den Eingang des ersten Dekodierers 23 geführt. Insoweit weist die erfindungsgemäße Dekodierungsvorrichtung 20 Ähnlichkeit mit einer in Figur 2 dargestellten aus dem Stand der Technik bekannten Dekodierungsvorrichtung auf.

Im Unterschied zu der bekannten Dekodierungsvorrichtung weist die erfindungsgemäße Dekodierungsvorrichtung 20 jedoch eine Vorrichtung 32 zum Ausführen eines Cyclic Redundancy Checks (CRC) im Anschluß an jede durchlaufene Iteration auf. Mit Hilfe des CRC kann die Qualität des dekodierten Signals 33 überprüft werden. Falls der CRC ergibt, dass der betrachtete Datenrahmen des dekodierten Signals 33 nicht fehlerfrei ist, dass das dekodierte Signal 33 also die vorgegebene Qualität (noch) nicht aufweist, wird das dekodierte Signal 33 über die Rückführung 27 zurück an den Eingang des ersten Dekodierers 23 geführt und im Rahmen einer weiteren Iteration noch einmal dekodiert. Falls der Datenrahmen des dekodierten Signals 33 jedoch fehlerfrei ist, wird das dekodierte Signal 33 über einen Schwellwertdetektor 29 zur Umwandlung des Soft Outputs des Dekodierers 26 in einen Hard Output und eine weitere De-Interleave-Einheit 30 als estimated hard bits 31 ausgegeben.

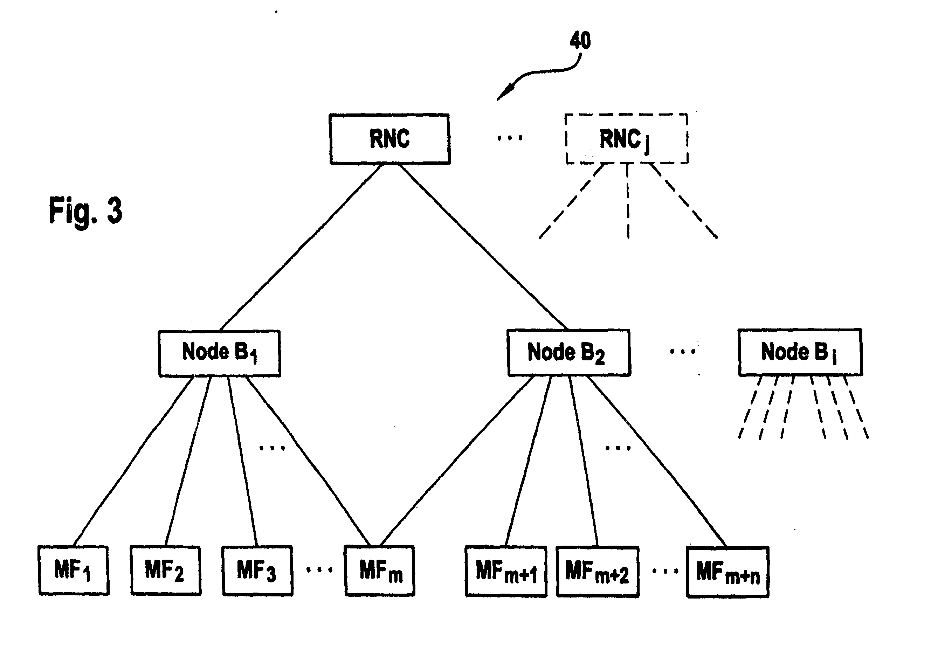

Die erfindungsgemäße Dekodierungsvorrichtung 20 wird auch als ein Turbo-Dekodierer bezeichnet. Ein solcher Turbo-Dekodierer kann in einer Basisstation Node B eines Funktelekommunikationssystems 40 (vgl. Figur 3) eingesetzt werden. Das in Figur 3 dargestellte Funktelekommunikationssystem entspricht dem UMTS-Standard und umfasst eine Vielzahl von mobilen Funkeinheiten MF₁ bis MFₘ und MFₘ₊₁ bis MFₘ₊ₙ, mehrere Basisstationen Node B₁, Node B₂, die in einem Funkkontakt mit den mobilen Funkeinheiten MF stehen. Außerdem umfasst das UMTS-Funktelekommunikationssystem 40 eine als Radio Network Controller (RNC) ausgebildete Steuerungsvorrichtung zum Steuern des Funktelefonkommunikationssystems 40. Die Steuerungsvorrichtung RNC steht mit den Basisstationen Node B₁, Node B₂ in Verbindung. Das Funktelekommunikationssystem 40 kann nahezu beliebig erweitert werden (vgl. gestrichelte Linien in Figur 3; Node Bᵢ, RNCⱼ).

Die in Figur 1 dargestellte erfindungsgemäße Dekodierungsvorrichtung 20 ist auf einem digitalen Signal Prozessor (DSP) realisiert. Abhängig von dem verwendeten DSP kann innerhalb eines betrachteten Zeitraums (sog. Transmission Timing Interval Frame, TTI-Frame) nur eine bestimmte Anzahl an Iterationen ausgeführt werden. In dem vorliegenden Ausführungsbeispiel wird ein DSP vom Typ TigerSHARC mit einer Taktrate von 180 MHz verwendet, der innerhalb eines TTI-Frames zehn Iterationen ausführen kann. Im Anschluß an das TTI-Frame steht am Eingang der Dekodierungsvorrichtung 20 bereits der nächste Datenrahmen des nachfolgenden TTI-Frames des Empfangssignals 21 zur Dekodierung an.

Mit der erfindungsgemäßen Vorrichtung kann bei einem Störungsgrad des Empfangssignals 21 von etwa 1 dB im Mittel eine etwa 70%-ige Einsparung an Rechenaufwand für die einzelnen DSPs erzielt werden. Diese Einsparung an Rechenaufwand wird dadurch erzielt, dass bei der Dekodierungsvorrichtung 20 nicht standardmäßig volle acht Iterationen ausgeführt werden, sondern die Anzahl der Iterationen bedarfsabhängig bestimmt wird. Wenn ein Empfangssignal 21 bspw. bereits nach zwei Iterationen fehlerfrei ist, kann die Dekodierung ohne Qualitätsverlust bereits dann, also vor dem Durchlauf aller acht Iterationen, abgebrochen werden. Nach Abbruch der Dekodierung ist der DSP in einem sog. idle-state und steht für andere Aufgaben, bspw. zur Entlastung anderer DSPs, zur Verfügung. Erfindungsgemäß werden drei Strategien für eine bessere Auslastung der DSPs einer Dekodierungsvorrichtung vorgeschlagen. Die vorgeschlagenen Strategien sind mit Z-, W- und Z⁺-Strategie bezeichnet. Sie sind weiter unten im Detail erläutert.

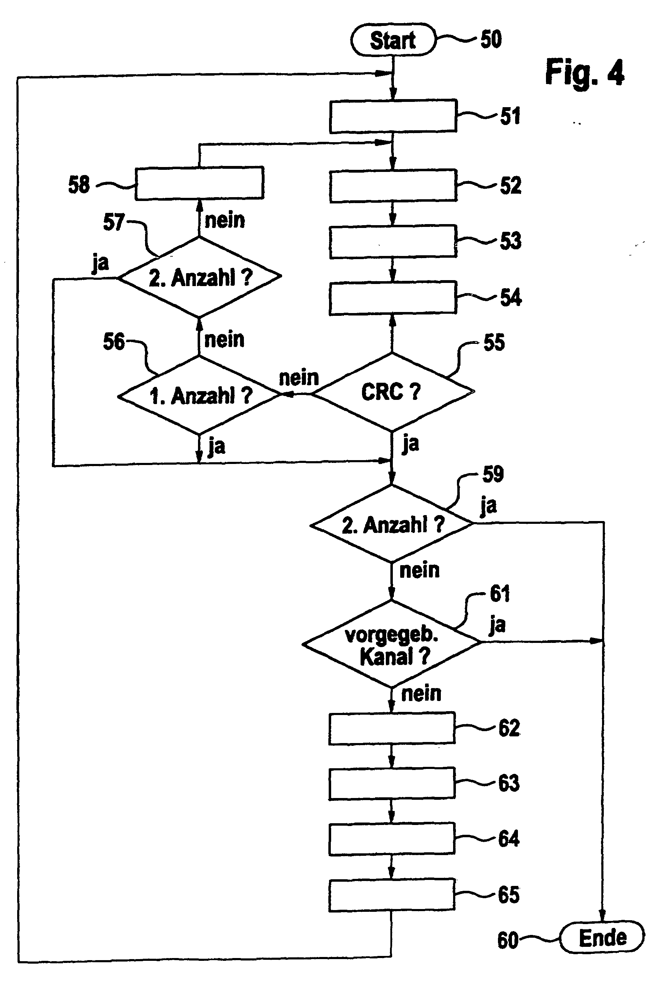

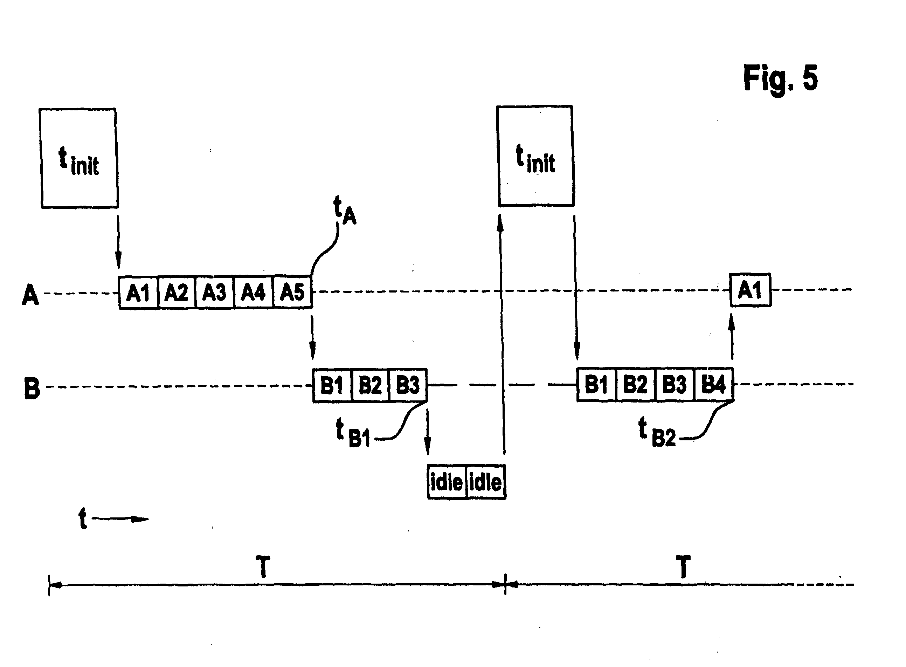

In Figur 4 ist ein Ablaufdiagramm eines erfindungsgemäßen Dekodierverfahrens für die sogenannte Z-Strategie (vgl. Figur 5) beschrieben. Das erfindungsgemäße Verfahren beginnt in einem Funktionsblock 50. In einem Funktionsblock 51 wird dann das sogenannte Unpuncturing ausgeführt. Diese Funktion wird von der Unpuncturing- und Demultiplexing-Einheit 22 übernommen. Das Unpuncturing ist Teil eines Rate Matching und umfasst - vereinfacht ausgedrückt - im wesentlichen das Hinzufügen von im Rahmen der Funkübertragung weggelassener Bits in den Datenrahmen mit einer Amplitude 0. In einem Funktionsblock 52 wird dann eine von dem ersten Dekodierer 23 durchgeführte erste Dekodierung des Eingangssignals 21 ausgeführt.

In einem Funktionsblock 53 wird das Ausgangssignal 24 des ersten Dekodierers 23 umsortiert, so dass in dem Datenrahmen ursprünglich benachbarte Bits möglichst weit voneinander entfernt angeordnet werden. Diese Funktion wird von der Interleave Einheit 25 ausgeführt. Durch das Umsortieren der Bits in dem Funktionsblock 53 bleibt zwar die Fehlerrate des in dem betrachteten Datenrahmen übertragenen Empfangssignals 21 gleich, fehlerhafte Bits sind jedoch über den gesamten Datenrahmen verteilt angeordnet. Dadurch kann eine mögliche Fehlerkorrektur in dem anschließenden zweiten Dekodierer 26 entscheidend verbessert werden. In einem nachfolgenden Funktionsblock 54 erfolgt dann die in dem zweiten Dekodierer 26 ausgeführte weitere Dekodierung.

In einem Abfrageblock 55 wird dann über ein in dem betrachteten Datenrahmen enthaltes dekodiertes Signal 33 ein Cyclic Redundancy Check (CRC) ausgeführt und überprüft, ob das dekodierte Signal 33 fehlerfrei ist oder nicht. Falls das dekodierte Signal 33 fehlerfrei ist (CRC OK), kann das Dekodierungsverfahren des über den betrachteten Kanal übertragenen Datenrahmens bereits nach dieser ersten Iteration abgebrochen werden. Falls das dekodierte Signal 33 jedoch nicht fehlerfrei ist (CRC NOK), wird zu einem Abfrageblock 56 verzweigt, in dem überprüft wird, ob für den betrachteten Datenrahmen des betrachteten Kanals bereits eine vorgebbare erste Anzahl an Iterationen, im vorliegenden Ausführungsbeispiel acht Iterationen, ausgeführt wurden. Falls dem so ist, wird die Dekodierung des betrachteten Datenrahmens für den betrachteten Kanal nach den bereits ausgeführten acht Iterationen abgebrochen, und es wird zu Abfrageblock 59 verzweigt, obwohl das über den betrachteten Kanal übertragene dekodierte Signal 33 nicht fehlerfrei ist. Anderenfalls wird zu einem weiteren Abfrageblock 57 verzweigt, wo überprüft wird, ob innerhalb einer betrachteten Zeitdauer für die Datenrahmen sämtlicher betrachteter Kanäle insgesamt eine vorgebbare zweite Anzahl an Iterationen, im vorliegenden Ausführungsbeispiel zehn Iterationen, ausgeführt worden sind. Falls dem so ist, wird die Dekodierung für den betrachteten Datenrahmen des betrachteten Kanals ebenfalls abgebrochen, und es wird zu dem Abfrageblock 59 verzweigt. Anderenfalls wird zu einem Funktionsblock 58 verzweigt, in dem das in dem Funktionsblock 53 ausgeführte Umsortieren der Bits des betrachteten Datenrahmens rückgängig gemacht wird. Diese Funktion wird von der De-Interleave-Einheit 28 in der Rückführung 27 übernommen.

Danach wird wieder zu dem Funktionsblock 52 verzweigt, wo in dem ersten Dekodierer 23 eine weitere Dekodierung des bereits über eine Iteration dekodierten Signals 33 erfolgt. Es werden so lange Iterationen für den betrachteten Datenrahmen des betrachteten Kanals ausgeführt, bis das dekodierte Signal 33 fehlerfrei ist (Abfrageblock 55), bis für den betrachteten Datenrahmen acht Iterationen ausgeführt wurden (Abfrageblock 56) oder bis innerhalb des betrachteten TTI-Frames für sämtliche Datenrahmen aller betrachteter Kanäle insgesamt zehn Iterationen ausgeführt wurden (Abfrageblock 57).

In dem Abfrageblock 59 wird überprüft, ob für sämtliche Datenrahmen aller betrachteten Kanäle insgesamt bereits zehn Iterationen ausgeführt worden sind. Falls ja, muß das Verfahren in einem Funktionsblock 60 beendet werden, da am Eingang der Dekodierungsvorrichtung 20 bereits Datenrahmen des nächsten TTI-Frames zur Dekodierung anstehen. Anderenfalls wird zu einem Abfrageblock 61 verzweigt, in dem überprüft wird, ob Datenrahmen von allen diesem DSP zugewiesenen Kanälen dekodiert worden sind. Falls die Datenrahmen von allen Kanälen dekodiert worden sind, wird das Verfahren ebenfalls beendet. Anderenfalls wird zu einem Funktionsblock 62 verzweigt, mit dem der Soft Output des zweiten Dekodierers 26 aus dem Funktionsblock 54 in einen Hard Output umgewandelt wird. Dies sind entweder die physischen Bits 1, -1 oder die logischen Bits 0, 1. Diese Funktion ist durch den Schwellwertgeber 29 realisiert. Anschließend wird in einem Funktionsblock 63 das Umsortieren der in den betrachteten Datenrahmen enthaltenen Bits aus dem Funktionsblock 53 rückgängig gemacht. Diese Funktion ist in der De-Interleave-Einheit 30 der Dekodierungsvorrichtung 20 realisiert. In einem Funktionsblock 64 werden dann die estimated hard bits 31 ausgegeben. In einem Funktionsblock 65 wird schließlich zu einem weiteren Kanal umgeschaltet. Anschließend wird wieder zu dem Funktionsblock 51 verzweigt und das erfindungsgemäße Verfahren für den weiteren Kanal erneut durchlaufen.

In Figur 5 ist die sog. Z-Strategie dargestellt. Der betrachtete Zeitraum, der dem DSP zur Dekodierung der in Datenrahmen über die Kanäle übertragenen Eingangssignale zur Verfügung steht, (TTI-Frame) ist mit dem Bezugszeichen T bezeichnet. Dem DSP sind die Kanäle A und B zugeordnet. Zu Beginn des betrachteten Zeitraums T wird eine Initialisierung der Dekodierungsvorrichtung 20 ausgeführt, die bspw. die Initialisierung eines sog. Rake-Empfängers, wie er zum Empfang von Code Division Multiple Access (CDMA)-Funksignalen eingesetzt wird, und die Initialisierung der Interleave Einheiten 28, 30 umfaßt. Die Zeit die zur Initialisierung benötigt wird, ist mit tᵢₙᵢₜ bezeichnet. Die in Figur 5 dargestellte Z-Strategie beginnt bei dem Kanal A mit der Dekodierung des betrachteten Datenrahmens. Mit A1 bis A5 sind die nacheinander ausgeführten Iterationen zur Dekodierung des in dem betrachteten Datenrahmen des Kanals A übertragenen Empfangssignals 21 bezeichnet. Nach fünf Iterationen zum Zeitpunkt t_{A} ist der betrachtete Datenrahmen fehlerfrei. Die auf dem DSP innerhalb des TTI-Frames T noch zur Verfügung stehende Rechenkapazität reicht für fünf weitere Iterationen einer Dekodierung. Die Rechenkapazität wird zur Dekodierung eines Datenrahmens des Kanals B verwendet. Es wird auf den Kanal B umgeschaltet und der betrachtete Datenrahmen wird in mehreren Iterationen B1 bis B3 dekodiert. Im Anschluß an drei Iterationen zum Zeitpunkt t_{B1} ist das in dem betrachteten Datenrahmen des Kanals B übertragene dekodierte Signal 33 fehlerfrei. Für die verbleibenden zwei Iterationen ist der DSP frei, d.h. im einem idle-state.

Danach steht der DSP wieder für das nachfolgende TTI-Frame T zum Dekodieren weiterer Datenrahmen der Kanäle A, B zur Verfügung. Zu Beginn des betrachteten Zeitraums T erfolgt für die Zeitdauer tᵢₙᵢₜ wiederum eine Initialisierung der Dekodierungsvorrichtung 20. Dieses Mal beginnt das Dekodierungsverfahren bei einem über den Kanal B übertragenen Datenrahmen. Das über den betrachteten Datenrahmen übertragene Empfangssignal 21 ist nach vier Iterationen zum Zeitpunkt t_{B2} fehlerfrei. Danach wird auf den Kanal A umgeschaltet, und die Dekodierung des Datenrahmens A beginnt mit der ersten Iteration A1.

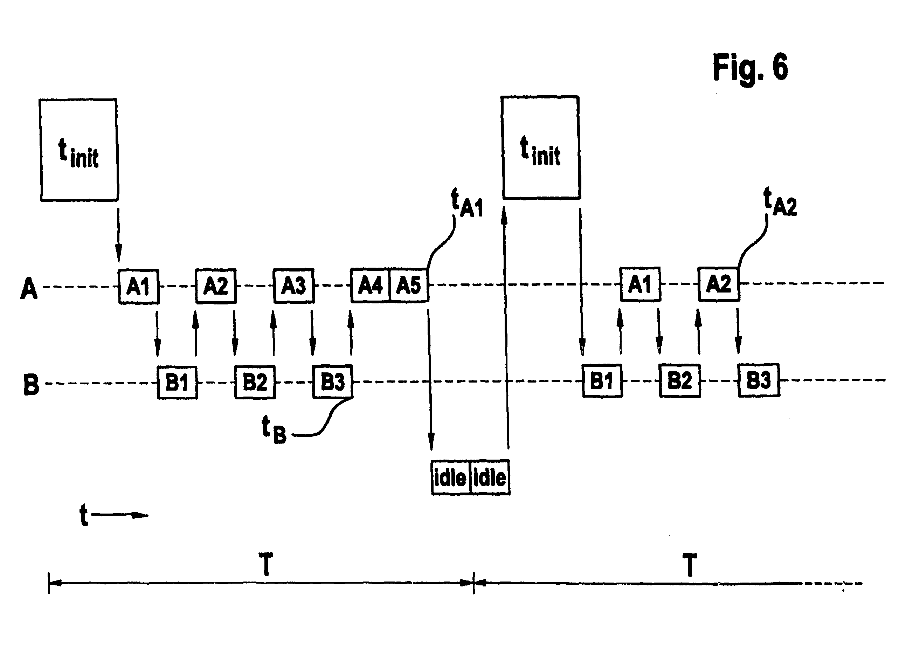

In Figur 6 ist eine zweite bevorzugte Ausführungsform des erfindungsgemäßen Verfahrens dargestellt. Das in Figur 6 dargestellte Verfahren wird als W-Strategie bezeichnet. Durch die W-Strategie kann ein Nachteil der Z-Strategie verhindert werden, dass nämlich falls mit der Dekodierung eines relativ stark gestörten Empfangssignals begonnen wird, die Dekodierung des entsprechenden Datenrahmens nahezu die gesamten innerhalb des TTI-Frames T zur Verfügung stehenden Iterationen benötigt und für Datenrahmen des weiteren Kanals nur noch einige wenige Iterationen zur Verfügung stehen. Wenn der Datenrahmen des weiteren Kanals über einen sehr geringen Umfang hinaus gestört ist, reichen die verbleibenden Iterationen mit hoher Wahrscheinlichkeit nicht für eine Dekodierung des Datenrahmens des weiteren Kanals bis zur Fehlerfreiheit aus. Falls bspw. bei der Z-Strategie die Dekodierung des Datenrahmens des Kanals A volle acht Iterationen benötigt (angenommener worst case), stehen für die Dekodierung des weiteren Datenrahmens des Kanals B nur noch zwei Iterationen zur Verfügung. Dieser Nachteil wird durch die beschriebene Strategie behoben.

Bei der W-Strategie wird - wie aus Figur 6 ersichtlich - nach jeder Iteration auf den anderen Kanal umgeschaltet. Das führt dazu, dass - um auf den oben beschriebenen worst case zurückzukommen - für den Datenrahmen des weiteren Kanals mindestens fünf Interationen ausgeführt werden, selbst wenn der Datenrahmen des ersten Kanals stark gestört ist. Die Wahrscheinlichkeit, dass ein Datenrahmen nach fünf Iterationen bis zur Fehlerfreiheit dekodiert ist, ist bei der W-Strategie wesentlich höher als nach lediglich zwei Iterationen bei der Z-Strategie. Es ist jedoch anzumerken, dass die Z-Strategie der W-Strategie in bestimmten Fällen überlegen ist. Wenn bspw. einem DSP zwei Kanäle zur Dekodierung zugeordnet sind und für die Dekodierung der Datenrahmen beider Kanäle jeweils sechs Iterationen bei maximal zehn zur Verfügung stehenden Iterationen benötigt werden, führt das bei der W-Strategie dazu, dass beide Datenrahmen nicht bis zur Fehlerfreiheit dekodiert werden können und somit verworfen werden müssen. Dagegen wird mit der Z-Strategie zumindest einer der beiden Datenrahmen bis zur Fehlerfreiheit dekodiert.

In dem Ausführungsbeispiel aus Figur 6 wird wiederum zu Beginn des betrachteten TTI-Frames T für die Zeitdauer tᵢₙᵢₜ eine Initialisierung der Dekodierungsvorrichtung 20 ausgeführt. Dann wird mit der Dekodierung des Datenrahmens des Kanals A begonnen. Nach der ersten Iteration A1 wird auf den Kanal B umgeschaltet und mit der Dekodierung des Datenrahmens des Kanals B begonnen. Wiederum wird nach einer Interation B1 auf den Kanal A umgeschaltet, wo die Dekodierung des Datenrahmens A mit der zweiten Iteration A2 ausgesetzt wird. Auf diese Weise wird im Anschluß an jede Iteration zyklisch jeweils für eine Iteration so lange zwischen dem Kanal A und dem Kanal B umgeschaltet, bis ein über den betrachteten Kanal A oder B übertragenes dekodiertes Signal 33 fehlerfrei ist. Im vorliegenden Ausführungsbeispiel ist das über den Kanal B übertragene dekodierte Signal nach drei Iterationen zum Zeitpunkt t_{B} fehlerfrei. Anschließend wird wieder auf den Kanal A umgeschaltet und die verbleibende Rechenkapazität des DSP voll für die Dekodierung des über den Kanal A übertragenen Datenrahmens verwendet. Der Datenrahmen des Kanals A ist nach zwei weiteren Iterationen, insgesamt also nach fünf Iterationen, zum Zeitpunkt t_{A1} fehlerfrei. Der DSP ist dann noch für zwei Zyklen im idle-state.

Zur Dekodierung der nachfolgenden Datenrahmen der Kanäle A, B wird mit der Dekodierung des über den Kanal B übertragenen Datenrahmens begonnen und wiederum im Anschluß an jede Iteration zyklisch jeweils für eine Iteration zwischen den Kanälen A, B umgeschaltet. Der über den Kanal A übertragene Datenrahmen ist nach zwei Iterationen zum Zeitpunkt t_{A2} fehlerfrei. Im Anschluß daran wird auf den Kanal B übertragen und die innerhalb des betrachteten TTI-Frames T noch zur Verfügung stehende Rechenkapazität des DSP voll zur Dekodierung des über den Kanal B übertragenen Datenrahmens verwendet.

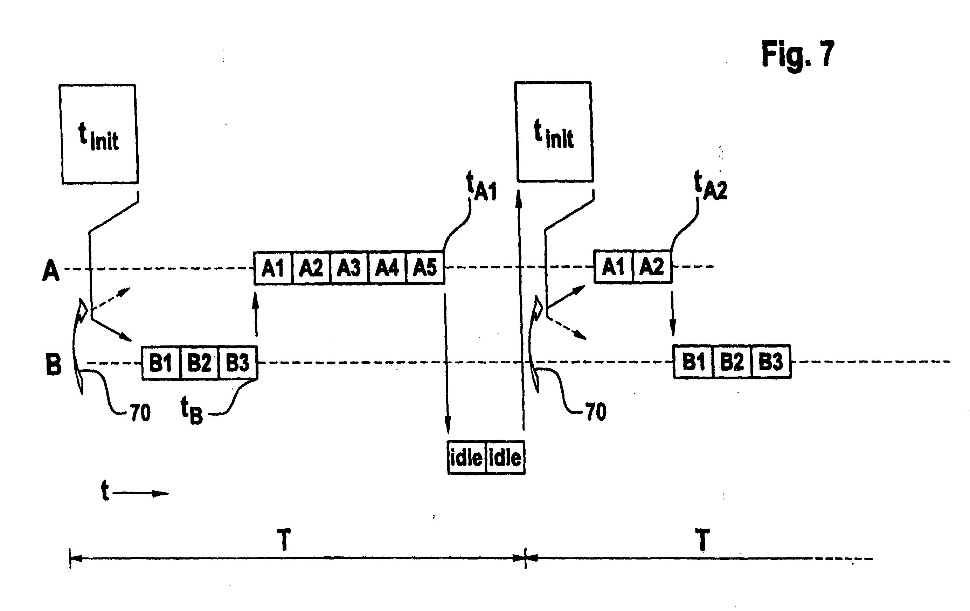

In Figur 7 ist ein drittes bevorzugtes Ausführungsbeispiel des erfindungsgemäßen Verfahrens dargestellt. Dieses Ausführungsbeispiel wird als Z⁺-Strategie bezeichnet. Die Z⁺-Strategie entspricht im wesentlichen der in Figur 5 dargestellten Z-Strategie. Die Z⁺-Strategie unterscheidet sich von der Z-Strategie jedoch dadurch, dass das Dekodierungsverfahren auf demjenigen Kanal begonnen wird, über den das Empfangssignal 21 mit der besten Güte übertragen wird. Das hat den Vorteil, dass insbesondere wenn im Rahmen des Dekodierungsverfahrens zwischen mehr als zwei Kanälen umgeschaltet wird, möglichst viele Datenrahmen, nämlich die am wenigsten gestörten Datenrahmen, innerhalb des zur Verfügung stehenden TTI-Frames T bis zur Fehlerfreiheit dekodiert werden können.

Informationen über die Güte des übertragenen Empfangssignals 21 können aus verschiedenen Quellen bezogen werden. So ist es bspw. denkbar, die Güte der Empfangssignale 21 anhand eines Signal-Zu-Rausch-Abstandes (Signal-to-Interference-Ratio, SIR) der Empfangssignale 21 zu ermitteln. Bei UMTS-Funktelekommunikationssystemen wird der SIR standardmäßig bspw. zur Anpassung der Sendeleistung der mobilen Funkeinheiten ermittelt. Der SIR kann ohne großen Aufwand zur Auswahl des ersten Kanals zur Durchführung des erfindungsgemäßen Verfahrens herangezogen werden. Die Güte des Empfangssignals kann aber auch anhand der Bitfehlerrate von Pilot Bits in einem Dedicated Physical Control Channel (DPCCH) der Empfangssignale 21 ermittelt werden.

In dem Ausführungsbeispiel aus Figur 7 wird zu Beginn des TTI-Frames T während der Zeitdauer tᵢₙᵢₜ zunächst eine Initialisierung der Dekodierungsvorrichtung 20 vorgenommen. Im Anschluß daran wird aus den beiden Kanälen A, B derjenige Kanal ausgewählt, über den das Empfangssignal 21 mit der besseren Güte übertragen wird. Die Auswahl des Kanals ist durch einen Pfeil 70 symbolisiert und ist in der Dekodierungsvorrichtung 20 durch die Einheit 22 realisiert. Im vorliegenden Ausführungsbeispiel wird das Empfangssignal 21 über den Kanal B mit der besten Güte übertragen, und das Dekodierungsverfahren beginnt bei dem Kanal B. Nach drei Iterationen B1 bis B3 ist der über den Kanal B übertragene Datenrahmen zum Zeitpunkt t_{B} fehlerfrei. Dann wird auf den Kanal A umgeschaltet, wo der über den Kanal A übertragene Datenrahmen dekodiert wird. Der Datenrahmen des Kanals A ist nach fünf Iterationen A1 bis A5 zum Zeitpunkt t_{A1} fehlerfrei. Der DSP ist innerhalb des betrachteten TTI-Frames T noch für zwei Iterationen in dem idle-state.

Zur Dekodierung der in dem nachfolgenden TTI-Frame T anliegenden Datenrahmen der Kanäle A, B wird wiederum zunächst eine Initialisierung tᵢₙᵢₜ der Dekodierungsvorrichtung 20 ausgeführt. Anschließend erfolgt eine Auswahl 70 desjenigen Kanals, über den das Empfangssignal 21 mit der besten Güte übertragen wird. In dem nunmehr betrachteten TTI-Frame T wird das Signal 21 über den Kanal A am besten übertragen, und das Dekodierungsverfahren beginnt bei dem Kanal A. Der über den Kanal A übertragene Datenrahmen ist nach zwei Iterationen A1, A2 zum Zeitpunkt t_{A2} fehlerfrei. Es wird auf den Kanal B umgeschaltet, wo mit der Dekodierung des über den Kanal B übertragenen Datenrahmens begonnen wird.

## Patentansprüche

1. Iteratives Verfahren zum Dekodieren von in Datenrahmen über verschiedene Kanäle (A; B) übertragenen Empfangssignalen mittels eines digitalen Signalprozessors (DSP), wobei dem digitalen Signalprozessor (DSP) mehrere Kanäle zugeordnet sind und beginnend bei einem ersten Kanal (A; B) die Qualität eines über den ersten Kanal (A; B) übertragenen dekodierten Signals (33) überprüft und der digitale Signalprozessor (DSP) auf mindestens einen weiteren Kanal (B; A) umgeschaltet wird, falls eine vorgebbare Umschaltbedingung erfüllt ist, **dadurch gekennzeichnet, dass** die Qualität eines über den ersten Kanal (A; B) übertragenen dekodierten Signals (33) im Anschluss an jede Iteration (A1, ..., A5; B1, ..., B3) überprüft wird und aus einer vorgebbaren Anzahl an Kanälen (A, B) als erster Kanal derjenige Kanal ausgewählt wird, über den das Signal (21) mit der besten Güte übertragen wird.

2. Verfahren nach Anspruch 1, **dadurch gekennzeichnet, dass** der digitale Signalprozessor (DSP) auf den mindestens einen weiteren Kanal (B; A) umgeschaltet wird, falls das über den betrachteten Kanal (A; B) übertragene dekodierte Signal (33) eine vorgebbare Qualität aufweist.

3. Verfahren nach Anspruch 1 oder 2, **dadurch gekennzeichnet, dass** für jeden dekodierten Datenrahmen des betrachteten Kanals (A; B) im Anschluss an jede Iteration (A1, ..., A5; B1, ..., B3) ein Cyclic Redundancy Check (CRC) ausgeführt und auf den mindestens einen weiteren Kanal (B; A) umgeschaltet wird, falls der über den betrachteten Kanal (A; B) übertragene dekodierte Datenrahmen fehlerfrei ist.

4. Verfahren nach einem der Ansprüche 1 bis 3, **dadurch gekennzeichnet, dass** auf einen weiteren Kanal (B; A) umgeschaltet wird, obwohl das über den betrachteten Kanal (A; B) übertragene dekodierte Signal (33) die vorgebbare Qualität nicht aufweist, falls für einen Datenrahmen des betrachteten Kanals (A; B) eine vorgebbare erste Anzahl an Iterationen ausgeführt wurde.

5. Verfahren nach Anspruch 1, **dadurch gekennzeichnet, dass** beginnend bei einem ersten Kanal (A; B) im Anschluss an eine Iteration (A1, ..., A5; B1, ..., B3) zyklisch jeweils für eine bestimmte Anzahl an Iterationen so lange zwischen dem ersten Kanal (A; B) und mindestens einem weiteren Kanal (B; A) umgeschaltet wird, bis das über den betrachteten Kanal (A; B) übertragene dekodierte Signal (33) eine vorgebbare Qualität aufweist.

6. Verfahren nach Anspruch 5, **dadurch gekennzeichnet, dass** für jeden dekodierten Datenrahmen des betrachteten Kanals (A; B) im Anschluss an jede Iteration (A1, ..., A5; B1, ..., B3) ein Cyclic Redundancy Check (CRC) ausgeführt wird und so lange zwischen dem ersten Kanal (A; B) und dem mindestens einen weiteren Kanal (B; A) umgeschaltet wird, bis der über den betrachteten Kanal (A; B) übertragene dekodierte Datenrahmen fehlerfrei ist.

7. Verfahren nach Anspruch 5 oder 6, **dadurch gekennzeichnet, dass** im Anschluss an jede Iteration (A1, ..., A5; B1, ..., B3) zyklisch jeweils für eine Iteration zwischen dem ersten Kanal (A; B) und dem mindestens einen weiteren Kanal (B; A) umgeschaltet wird.

8. Verfahren nach einem der Ansprüche 1 bis 7, **dadurch gekennzeichnet, dass** das Verfahren abgebrochen wird, falls das über einen vorgebbaren weiteren Kanal (B; A) übertragene dekodierte Signal (33) eine vorgebbare Qualität aufweist.

9. Verfahren nach einem der Ansprüche 1 bis 8, **dadurch gekennzeichnet, dass** das Verfahren abgebrochen wird, obwohl das über den betrachteten Kanal (A; B) übertragene dekodierte Signal (33) die vorgebbare Qualität nicht aufweist, falls für die Datenrahmen des ersten und der weiteren Kanäle (A, B) insgesamt eine vorgebbare zweite Anzahl an Iterationen ausgeführt wurde.

10. Verfahren nach einem der Ansprüche 1 bis 9, **dadurch gekennzeichnet, dass** die Güte der Signale (21) der vorgebbaren Anzahl an Kanälen (A, B) anhand eines Signal-zu-Rausch-Abstandes (Signal-to-Interference-Ratio, SIR) der Signale (21) ermittelt wird.

11. Verfahren nach einem der Ansprüche 1 bis 9, **dadurch gekennzeichnet, dass** die Güte der Signale (21) der vorgebbaren Anzahl an Kanälen (A, B) anhand einer Bitfehlerrate von Bits in einem Steuerkanal der Signale (21) ermittelt wird.

12. Verfahren nach Anspruch 11, **dadurch gekennzeichnet, dass** die Güte der Signale (21) der vorgebbaren Anzahl an Kanälen (A, B) anhand einer Bitfehlerrate von Pilot Bits in einem Dedicated Physical Control Channel (DPCCH) der Signale (21) ermittelt wird.

13. Vorrichtung (20) zum Dekodieren von in Datenrahmen über verschiedene Kanäle (A; B) übertragenen Empfangssignalen (21) mittels eines iteratives Verfahrens, wobei die Dekodierungsvorrichtung (20) einen digitalen Signalprozessor (DSP), dem mehrere Kanäle (A, B) zugeordnet sind, und Mittel umfasst, die beginnend bei einem ersten Kanal (A; B) die Qualität eines über den ersten Kanal (A; B) übertragenen dekodierten Signals (33) überprüfen und den digitalen Signalprozessor (DSP) auf mindestens einen weiteren Kanal (B; A) umschalten, falls eine vorgebbare Umschaltbedingung erfüllt ist, **dadurch gekennzeichnet, dass** die Vorrichtung (20) derart ausgestaltet ist, dass sie die Qualität eines über den ernsten Kanal (A; B) übertragenen dekodierten Signals (33) im Anschluss an jede Iteration (A1, ..., A5; B1, ..., B3) überprüft und aus einer vorgebbaren Anzahl an Kanälen (A, B) als ersten Kanal denjenigen Kanal auswählt, über den das Signal (21) mit der besten Güte übertragen wird.

14. Dekodierungsvorrichtung (20) nach Anspruch 13, **dadurch gekennzeichnet, dass** die Dekodierungsvorrichtung (20) mindestens zwei in Reihe geschaltete konstituierende Dekodierer (23, 26), jeweils eine zwischen den zwei konstituierenden Dekodierern (23, 26) angeordnete Interleave-Einheit (25), eine Rückführung (27) eines Ausgangs (33) des letzten konstituierenden Dekodierers (26) an einen Eingang des ersten konstituierenden Dekodierers (23) und eine in der Rückführung (27) angeordnete De-Interleave-Einheit (28) aufweist.

15. Vorrichtung zum Empfangen von in Datenrahmen über verschiedene Kanäle (A; B) übertragenen Empfangssignalen (21), wobei die Empfangsvorrichtung mindestens eine Vorrichtung (20) zum Dekodieren der Empfangssignale (21) mittels eines iterativen Verfahrens aufweist, wobei die Dekodierungsvorrichtung (20) einen digitalen Signalprozessor (DSP), dem mehrere Kanäle zugeordnet sind, und Mittel umfasst, die beginnend bei einem ersten Kanal (A; B) die Qualität eines über den ersten Kanal (A; B) übertragenen dekodierten Signals (33) überprüfen und den digitalen Signalprozessor (DSP) auf mindestens einen weiteren Kanal (B; A) umschalten, falls eine vorgebbare Umschaltbedingung erfüllt ist, **dadurch gekennzeichnet, dass** die Vorrichtung (20) derart ausgestaltet ist, dass sie die Qualität eines über den ersten Kanal (A; B) übertragenen dekodierten Signals (33) im Anschluss an jede Iteration (A1, ..., A5; B1, ..., B3) überprüft und aus einer vorgebbaren Anzahl an Kanälen (A, B) als ersten Kanal denjenigen Kanal auswählt, über den das Signal (21) mit der besten Güte übertragen wird.

16. Basisstation (Node B₁) eines Funktelekommunikationssystems (40), wobei die Basisstation (Node B₁) eine Vorrichtung zum Empfangen von in Datenrahmen über verschiedene Kanäle (A; B) übertragenen Empfangssignalen (21) mit mindestens einer Vorrichtung (20) zum Dekodieren der Empfangssignale (21) mittels eines iterativen Verfahrens aufweist, wobei die Dekodierungsvorrichtung (20) einen digitalen Signalprozessor (DSP), dem mehrere Kanäle zugeordnet sind, und Mittel umfasst, die beginnend bei einem ersten Kanal (A; B) die Qualität eines über den ersten Kanal (A; B) übertragenen dekodierten Signals (33) überprüfen und den digitalen Signalprozessor (DSP) auf mindestens einen weiteren Kanal (B; A) umschalten, falls eine vorgebbare Umschaltbedingung erfüllt ist, **dadurch gekennzeichnet, dass** die Vorrichtung (20) derart ausgestaltet ist, dass sie die Qualität eines über den ersten Kanal (A; B) übertragenen dekodierten Signals (33) im Anschluss an jede Iteration (A1, ..., A5; B1, ..., B3) überprüft und aus einer vorgebbaren Anzahl an Kanälen (A, B) als ersten Kanal denjenigen Kanal auswählt, über den das Signal (21) mit der besten Güte übertragen wird.

17. Funktelekommunikationssystem (40) mit einer Vielzahl von mobilen Funkeinheiten (MF), mit mehreren Basisstationen (Node B₁, Node B₂) die in einem Funkkontakt mit den mobilen Funkeinheiten (MF) stehen, und mit mindestens einer Steuerungsvorrichtung (RNC) zum Steuern des Funktelekommunikationssystems (40), die mit den Basisstationen (Node B₁, Node B₂) in Verbindung steht, wobei die Basisstationen (Node B₁, Node B₂) eine Vorrichtung zum Empfangen von in Datenrahmen über verschiedene Kanäle (A; B) übertragenen Empfangssignalen (21) mit mindestens einer Vorrichtung (20) zum Dekodieren der Empfangssignale (21) mittels eines iterativen Verfahrens aufweisen, wobei die Dekodierungsvorrichtung (20) einen digitalen Signalprozessor (DSP), dem mehrere Kanäle zugeordnet sind, und Mittel umfasst, die beginnend bei einem ersten Kanal (A; B) die Qualität eines über den ersten Kanal (A; B) übertragenen dekodierten Signals (33) überprüfen und den digitalen Signalprozessor (DSP) auf mindestens einen weiteren Kanal (B; A) umschalten, falls eine vorgebbare Umschaltbedingung erfüllt ist, **dadurch gekennzeichnet, dass** die Vorrichtung (20) derart ausgestaltet ist, dass sie die Qualität eines über den ersten Kanal (A; B) übertragenen dekodierten Signals (33) im Anschluss an jede Iteration (A1, ..., A5; B1, ..., B3) überprüft und aus einer vorgebbaren Anzahl an Kanälen (A, B) als ersten Kanal denjenigen Kanal auswählt, über den das Signal (21) mit der besten Güte übertragen wird.

18. Funktelekommunikationssystem (40) nach Anspruch 17, **dadurch gekennzeichnet, dass** eine mobile Funkeinheit (MFₘ) mit mehreren Basisstationen (Node B₁, Node B₂) in Funkkontakt steht, die Basisstationen (Node B₁, Node B₂), die in Funkkontakt mit der mobilen Funkeinheit (MFₘ) stehen, Mittel zum Übertragen der Güte der Funkverbindung an die Steuerungsvorrichtung (RNC) aufweisen, die Steuerungsvorrichtung (RNC) Mittel zum Übertragen von Informationen über die Güte der Funkverbindungen an die Basisstationen (Node B₁, Node B₂) aufweist.

19. Funktelekommunikationssystem (40) nach Anspruch 17 oder 18, **dadurch gekennzeichnet, dass** die Basisstationen (Node B₁, Node B₂) derart ausgestaltet sind, dass sie die Informationen über die Güte der Funkverbindung zur Auswahl des mindestens einen weiteren Kanals (B; A) aus der vorgebbaren Anzahl an Kanälen (A, B) heranziehen.

20. Funktelekommunikationssystem (40) nach einem der Ansprüche 17 bis 19, **dadurch gekennzeichnet, dass** die Basisstationen (Node B₁, Node B₂) derart ausgestaltet sind, dass sie die Informationen über die Güte der Funkverbindungen zur Auswahl der Reihenfolge der weiteren Kanäle (B; A) aus der vorgebbaren Anzahl an Kanälen (A, B) heranziehen.

21. Funktelekommunikationssystem (40) nach einem der Ansprüche 17 bis 20, **dadurch gekennzeichnet, dass** die Basisstationen (Node B₁, Node B₂)derart ausgestaltet sind, dass sie die Informationen über die Güte der Funkverbindungen zur Auswahl des Zeitpunkts eines Wechsels zu einem weiteren Kanal (B; A) heranziehen.

22. Funktelekommunikationssystem (40) nach einem der Ansprüche 17 bis 21, **dadurch gekennzeichnet, dass** die Basisstationen (Node B₁, Node B₂) derart ausgestaltet sind, dass sie die Informationen über die Güte der Funkverbindungen zur Auswahl des Zeitpunkts eines Abbruchs des Verfahrens heranziehen.

## Claims

1. Iterative method for decoding, by means of a digital signal processor (DSP), received signals which are transmitted in data frames via different channels (A; B), wherein multiple channels are assigned to the digital signal processor (DSP), and wherein, starting with a first channel (A; B), the quality of a decoded signal (33) which is transmitted via the first channel (A; B) is checked, and the digital signal processor (DSP) is switched to at least one further channel (B; A) if a specifiable switching condition is fulfilled, **characterized in that** the quality of a decoded signal (33) which is transmitted via the first channel (A; B) is checked following each iteration (A1, ..., A5; B1, ..., B3), and from a specifiable number of channels (A, B) the channel via which the signal (21) is transmitted with the best quality is selected as the first channel.

2. Method according to Claim 1, **characterized in that** the digital signal processor (DSP) is switched to the at least one further channel (B; A) if the decoded signal (33) which is transmitted via the channel (A; B) under consideration has a specifiable quality.

3. Method according to Claim 1 or 2, **characterized in that** for each decoded data frame of the channel (A; B) under consideration, following each iteration (A1, ..., A5; B1, ..., B3), a cyclic redundancy check (CRC) is carried out, and switching to the at least one further channel (B; A) takes place if the decoded data frame which is transmitted via the channel (A; B) under consideration is error-free.

4. Method according to one of Claims 1 to 3, **characterized in that** switching to a further channel (B; A) takes place although the decoded signal (33) which is transmitted via the channel (A; B) under consideration does not have the specifiable quality, if for one data frame of the channel (A; B) under consideration a specifiable first number of iterations has been executed.

5. Method according to Claim 1, **characterized in that** starting with a first channel (A; B), following an iteration (A1, ..., A5; B1, ..., B3), switching takes place cyclically between the first channel (A; B) and at least one further channel (B; A) for a specified number of iterations, until the decoded signal (33) which is transmitted via the channel (A; B) under consideration has a specifiable quality.

6. Method according to Claim 5, **characterized in that** for each decoded data frame of the channel (A; B) under consideration, following each iteration (A1, ..., A5; B1, ..., B3), a cyclic redundancy check (CRC) is carried out, and switching between the first channel (A; B) and the at least one further channel (B; A) takes place until the decoded data frame which is transmitted via the channel (A; B) under consideration is error-free.

7. Method according to Claim 5 or 6, **characterized in that** following each iteration (A1, ..., A5; B1, ..., B3), switching between the first channel (A; B) and the at least one further channel (B; A) takes place cyclically for one iteration.

8. Method according to one of Claims 1 to 7, **characterized in that** the method is terminated if the decoded signal (33) which is transmitted via a specifiable further channel (B; A) has a specifiable quality.

9. Method according to one of Claims 1 to 8, **characterized in that** the method is terminated although the decoded signal (33) which is transmitted via the channel (A; B) under consideration does not have the specifiable quality, if in total a specifiable second number of iterations have been executed for the data frames of the first and further channels (A, B).

10. Method according to one of Claims 1 to 9, **characterized in that** that the quality of the signals (21) of the specifiable number of channels (A, B) is determined on the basis of a signal-to-interference ratio (SIR) of the signals (21).

11. Method according to one of Claims 1 to 9, **characterized in that** the quality of the signals (21) of the specifiable number of channels (A, B) is determined on the basis of a bit error rate of bits in a control channel of the signals (21).

12. Method according to Claim 11, **characterized in that** the quality of the signals (21) of the specifiable number of channels (A, B) is determined on the basis of a bit error rate of pilot bits in a Dedicated Physical Control Channel (DPCCH) of the signals (21).

13. Device (20) for decoding received signals (21) which are transmitted in data frames via different channels (A; B) by an iterative method, wherein the decoding device (20) includes a digital signal processor (DSP), to which multiple channels (A, B) are assigned, and means which, starting with a first channel (A; B), check the quality of a decoded signal (33) which is transmitted via the first channel (A; B), and switch the digital signal processor (DSP) to at least one further channel (B; A) if a specifiable switching condition is fulfilled, **characterized in that** the device (20) is in such a form that it checks the quality of a decoded signal (33) which is transmitted via the first channel (A; B) following each iteration (A1, ..., A5; B1, ..., B3), and from a specifiable number of channels (A, B), it selects the channel via which the signal (21) is transmitted with the best quality as the first channel.

14. Decoding device (20) according to Claim 13, **characterized in that** the decoding device (20) has at least two constituent decoders (23, 26) connected in series, an interleave unit (25) which is arranged between the two constituent decoders (23, 26), a return path (27) of an output (33) of the last constituent decoder (26) to an input of the first constituent decoder (23), and a de-interleave unit (28) which is arranged in the return path (27).

15. Device for receiving received signals (21) which are transmitted in data frames via different channels (A; B), wherein the receiving device has at least one device (20) for decoding the received signals (21) by an iterative method, wherein the decoding device (20) includes a digital signal processor (DSP), to which multiple channels are assigned, and means which, starting with a first channel (A; B), check the quality of a decoded signal (33) which is transmitted via the first channel (A; B), and switch the digital signal processor (DSP) to at least one further channel (B; A) if a specifiable switching condition is fulfilled, **characterized in that** the device (20) is in such a form that it checks the quality of a decoded signal (33) which is transmitted via the first channel (A; B) following each iteration (A1, ..., A5; B1, ..., B3), and from a specifiable number of channels (A, B), it selects the channel via which the signal (21) is transmitted with the best quality as the first channel.

16. Base station (Node B₁) of a radio telecommunication system (40), wherein the base station (node B₁) has a device for receiving received signals (21) which are transmitted in data frames via different channels (A; B), with at least one device (20) for decoding the received signals (21) by an iterative method, wherein the decoding device (20) includes a digital signal processor (DSP), to which multiple channels are assigned, and means which, starting with a first channel (A; B), check the quality of a decoded signal (33) which is transmitted via the first channel (A; B), and switch the digital signal processor (DSP) to at least one further channel (B; A) if a specifiable switching condition is fulfilled, **characterized in that** the device (20) is in such a form that it checks the quality of a decoded signal (33) which is transmitted via the first channel (A; B) following each iteration (A1, ..., A5; B1, ..., B3), and from a specifiable number of channels (A, B), it selects the channel via which the signal (21) is transmitted with the best quality as the first channel.

17. Radio telecommunication system (40) with multiple mobile radio units (MF), with multiple base stations (Node B₁, Node B₂) which are in radio contact with the mobile radio units (MF), and with at least one control device (RNC), which is connected to the base stations (Node B₁, Node B₂), to control the radio telecommunication system (40), wherein the base stations (Node B₁, Node B₂) have a device for receiving received signals (21) which are transmitted in data frames via different channels (A; B), with at least one device (20) for decoding the received signals (21) by an iterative method, wherein the decoding device (20) includes a digital signal processor (DSP), to which multiple channels are assigned, and means which, starting with a first channel (A; B), check the quality of a decoded signal (33) which is transmitted via the first channel (A; B), and switch the digital signal processor (DSP) to at least one further channel (B; A) if a specifiable switching condition is fulfilled, **characterized in that** the device (20) is in such a form that it checks the quality of a decoded signal (33) which is transmitted via the first channel (A; B) following each iteration (A1, ..., A5; B1, ..., B3), and from a specifiable number of channels (A, B), it selects the channel via which the signal (21) is transmitted with the best quality as the first channel.

18. Radio telecommunication system (40) according to Claim 17, **characterized in that** a mobile radio unit (MFₘ) is in radio contact with multiple base stations (Node B₁, Node B₂), the base stations (Node B₁, Node B₂) which are in radio contact with the mobile radio unit (MFₘ) have means for transmitting the quality of the radio connection to the control device (RNC), and the control device (RNC) has means for transmitting information about the quality of the radio connections to the base stations (Node B₁, Node B₂).

19. Radio telecommunication system (40) according to Claim 17 or 18, **characterized in that** the base stations (Node B₁, Node B₂) are in such a form that they use the information about the quality of the radio connection to select the at least one further channel (B; A) from the specifiable number of channels (A, B).

20. Radio telecommunication system (40) according to one of Claims 17 to 19, **characterized in that** the base stations (Node B₁, Node B₂) are in such a form that they use the information about the quality of the radio connections to select the sequence of further channels (B; A) from the specifiable number of channels (A, B).

21. Radio telecommunication system (40) according to one of Claims 17 to 20, **characterized in that** the base stations (Node B₁, Node B₂) are in such a form that they use the information about the quality of the radio connections to select the time of a change to a further channel (B; A).

22. Radio telecommunication system (40) according to one of Claims 17 to 21, **characterized in that** the base stations (Node B₁, Node B₂) are in such a form that they use the information about the quality of the radio connections to select the time at which the method is terminated.

## Revendications

1. Méthode itérative pour décoder des signaux de réception transmis dans des trames de données par l'intermédiaire de différents canaux (A ; B) à l'aide d'un processeur de signal numérique (DSP), moyennant quoi plusieurs canaux sont alloués au processeur de signal numérique (DSP) et, en commençant avec un premier canal (A ; B) la qualité d'un signal décodé (33) transmis par l'intermédiaire du premier canal (A ; B) est contrôlée et le processeur de signal numérique (DSP) est commuté vers au moins un autre canal (B ; A), dans le cas où une condition de commutation choisie est remplie, **caractérisée en ce que** la qualité d'un signal décodé (33) transmis par l'intermédiaire du premier canal (A ; B) à la fin de chaque itération (A1, ..., A5 ; B1, ..., B3) est contrôlée et **en ce qu'**est sélectionné en tant que premier canal, à partir d'un nombre choisi de canaux (A, B), celui par l'intermédiaire duquel le signal (21) est transmis avec le meilleur facteur de qualité.

2. Méthode selon la revendication 1, **caractérisée en ce que** le processeur de signal numérique (DSP) est commuté vers le au moins un autre canal (B ; A), dans le cas où le signal décodé (33) transmis par l'intermédiaire du canal considéré (A ; B) a une qualité choisie.

3. Méthode selon la revendication 1 ou 2, **caractérisée en ce que** pour chaque trame de données décodée du canal considéré (A ; B) un contrôle à redondance cyclique (CRC) est exécuté à la fin de chaque itération (A1, ..., A5 ; B1, ..., B3) et qu'une commutation se fait vers le au moins un autre canal (B ; A), dans le cas où la trame de données décodée transmise par l'intermédiaire du canal considéré (A ; B) est affranchie d'erreurs.

4. Méthode selon l'une quelconque des revendications 1 à 3, **caractérisée en ce qu'**une commutation se fait vers un autre canal (B ; A), bien que le signal décodé (33) transmis par l'intermédiaire du canal considéré (A ; B) n'ait pas la qualité choisie, dans le cas où un premier nombre choisi d'itérations a été exécuté pour une trame de données du canal considéré (A ; B).

5. Méthode selon la revendication 1, **caractérisée en ce qu'**en commençant avec un premier canal (A ; B), une commutation se fait à la fin d'une itération (A1, ..., A5 ; B1, ..., B3) cycliquement respectivement pour un nombre défini d'itérations entre le premier canal (A ; B) et au moins un autre canal (B ; A) jusqu'à ce que le signal décodé (33) transmis par l'intermédiaire du canal considéré (A ; B) ait une qualité choisie.

6. Méthode selon la revendication 5, **caractérisée en ce que** pour chaque trame de données décodée du canal considéré (A ; B), à la fin de chaque itération (A1, ..., A5 ; B1, ..., B3), un contrôle à redondance cyclique (CRC) est exécuté et une commutation entre le premier canal (A ; B) et le au moins un autre canal (B ; A) est reconduite jusqu'à ce que la trame de données décodée transmise par l'intermédiaire du canal considéré (A ; B) soit affranchie d'erreurs.

7. Méthode selon la revendication 5 ou 6, **caractérisée en ce qu'**à la fin de chaque itération (A1, ..., A5 ; B1, ..., B3) une commutation est conduite cycliquement respectivement pour une itération entre le premier canal (A ; B) et le au moins un autre canal (B ; A).

8. Méthode selon l'une quelconque des revendications 1 à 7, **caractérisée en ce que** la méthode est interrompue dans le cas où le signal décodé (33) transmis par l'intermédiaire d'un autre canal choisi (B ; A) a une qualité choisie.

9. Méthode selon l'une quelconque des revendications 1 à 8, **caractérisée en ce que** la méthode est interrompue bien que le signal décodé (33) transmis par l'intermédiaire d'un canal choisi (A ; B) n'ait pas la qualité choisie, dans le cas où un deuxième nombre choisi d'itérations a été exécuté pour les trames de données du premier canal et des autres canaux (A, B).

10. Méthode selon l'une quelconque des revendications 1 à 9, **caractérisée en ce que** le facteur de qualité des signaux (21) du nombre choisi de canaux (A, B) est déterminé au moyen d'un rapport signal utile/signal brouilleur (Signal-to-Interference-Ratio) des signaux (21).

11. Méthode selon l'une quelconque des revendications 1 à 9, **caractérisée en ce que** le facteur de qualité des signaux (21) du nombre choisi de canaux (A, B) est déterminé au moyen d'un taux d'erreur de bit correspondant aux bits dans un canal de commande des signaux (21).

12. Méthode selon la revendication 11, **caractérisée en ce que** le facteur de qualité des signaux (21) du nombre choisi de canaux (A, B) est déterminé au moyen d'un taux d'erreur de bit correspondant aux bits pilotes dans un canal de contrôle physique dédié (DPCCH) des signaux (21).

13. Appareil (20) pour décoder des signaux de réception (21) transmis dans des trames de données par l'intermédiaire de différents canaux (A ; B) à l'aide d'une méthode itérative, moyennant quoi l'appareil de décodage (20) comprend un processeur de signal numérique (DSP), auquel plusieurs canaux (A, B) sont alloués, et des moyens, qui en commençant avec un premier canal (A ; B) contrôlent la qualité d'un signal décodé (33) transmis par l'intermédiaire du premier canal (A ; B) et commutent le processeur de signal numérique (DSP) vers au moins un autre canal (B ; A), dans le cas où une condition de commutation choisie est remplie, **caractérisé en ce que** l'appareil (20) est réalisé de telle sorte qu'il contrôle la qualité d'un signal décodé (33) transmis par l'intermédiaire du premier canal (A ; B) à la fin de chaque itération (A1, ..., A5 ; B1, ..., B3) et sélectionne en tant que premier canal, à partir d'un nombre choisi de canaux (A, B), celui par l'intermédiaire duquel le signal (21) est transmis avec le meilleur facteur de qualité.

14. Appareil de décodage (20) selon la revendication 13, **caractérisé en ce que** l'appareil de décodage (20) comporte au moins deux décodeurs constituants montés en série (23, 26), respectivement une unité d'entrelaçage (25) arrangée entre les deux décodeurs constituants (23, 26), une boucle de retour (27) d'une sortie (33) du dernier décodeur constituant (26) couplée à une entrée du premier décodeur constituant (23) et une unité de désentrelaçage (28) arrangée dans la boucle de retour (27).

15. Appareil pour recevoir des signaux de réception (21) transmis dans des trames de données par l'intermédiaire de différents canaux (A ; B), moyennant quoi l'appareil de réception comporte au moins un appareil (20) pour décoder les signaux de réception (21) à l'aide d'une méthode itérative, moyennant quoi l'appareil de décodage (20) comprend un processeur de signal numérique (DSP), auquel plusieurs canaux sont alloués, et des moyens, qui, en commençant avec un premier canal (A ; B), contrôlent la qualité d'un signal décodé (33) transmis par l'intermédiaire du premier canal (A ; B) et commutent le processeur de signal numérique (DSP) vers au moins un autre canal (B ; A), dans le cas où une condition de commutation est remplie, **caractérisé en ce que** l'appareil (20) est réalisé de telle sorte qu'il contrôle la qualité d'un signal décodé (33) transmis par l'intermédiaire du premier canal (A ; B) à la fin de chaque itération (A1, ..., A5 ; B1, ..., B3) et sélectionne en tant que premier canal, à partir d'un nombre choisi de canaux (A, B), celui par l'intermédiaire duquel le signal (21) est transmis avec le meilleur facteur de qualité.

16. Stations de base (Noeud B₁) d'un système de radiotélécommunication (40), moyennant quoi la station de base (Noeud B₁) comporte un appareil pour recevoir des signaux de réception (21) transmis dans des trames de données par l'intermédiaire de différents canaux (A ; B) avec au moins un appareil (20) pour décoder des signaux de réception (21) à l'aide d'une méthode itérative, moyennant quoi l'appareil de décodage (20) comprend un processeur de signal numérique (DSP), auquel plusieurs canaux sont alloués, et des moyens qui, en commençant avec un premier canal (A ; B), contrôlent la qualité d'un signal décodé (33) transmis par l'intermédiaire du premier canal (A ; B) et commutent le processeur de signal numérique (DSP) vers au moins un autre canal (B ; A), dans le cas où une condition de commutation choisie est remplie, **caractérisées en ce que** l'appareil (20) est réalisé de telle sorte qu'il contrôle la qualité d'un signal décodé (33) transmis par l'intermédiaire du premier canal (A ; B) à la fin de chaque itération (A1, ... , A5 ; B1, ... , B3) et sélectionne en tant que premier canal, à partir d'un nombre choisi de canaux (A, B), celui par l'intermédiaire duquel le signal (21) est transmis avec le meilleur facteur de qualité.

17. Système de radiotélécommunication (40) avec une pluralité d'unités de radiocommunication mobiles (MF) avec plusieurs stations de base (Noeud B₁, Noeud B₂), qui sont en contact radio avec les unités de radiocommunication mobiles (MF), et avec au moins un appareil de commande (Contrôleur de radioréseau, RNC) pour commander le système de radiotélécommunication (40), qui est en liaison avec les stations de base (Noeud B₁, Noeud B₂), moyennant quoi les stations de base (Noeud B₁, Noeud B₂) comportent un appareil pour recevoir des signaux de réception (21) transmis dans des trames de données par l'intermédiaire de différents canaux (A ; B) avec au moins un appareil (20) pour décoder des signaux de réception (21) à l'aide d'une méthode itérative, moyennant quoi l'appareil de décodage (20) comprend un processeur de signal numérique (DSP), auquel plusieurs canaux sont alloués, et des moyens qui, en commençant avec un premier canal (A ; B), contrôlent la qualité d'un signal décodé (33) transmis par l'intermédiaire du premier canal (A ; B) et commutent le processeur de signal numérique (DSP) vers au moins un autre canal (B ; A) dans le cas où une condition de commutation choisie est remplie, **caractérisé en ce que** l'appareil (20) est réalisé de telle sorte qu'il contrôle la qualité d'un signal décodé (33) transmis par l'intermédiaire du premier canal (A ; B) à la fin de chaque itération (A1, ... , A5 ; B1, ... , B3) et sélectionne en tant que premier canal, à partir d'un nombre choisi de canaux (A, B), celui par l'intermédiaire duquel le signal (21) est transmis avec le meilleur facteur de qualité.

18. Système de radiotélécommunication (40) selon la revendication 17, **caractérisé en ce qu'**une unité de radiocommunication mobile (MFₘ) est en contact radio avec plusieurs stations de base (Noeud B₁, Noeud B₂), les stations de base (Noeud B₁, Noeud B₂), qui sont en contact radio avec l'unité de radiocommunication mobile (MFₘ), comportent des moyens pour transmettre le facteur de qualité de la liaison radio à l'appareil de commande (Contrôleur de radioréseau, RNC), l'appareil de commande (Contrôleur de radioréseau, RNC) comporte des moyens pour transmettre des informations relatives au facteur de qualité des liaisons radio aux stations de base (Noeud B₁, Noeud B₂).

19. Système de radiotélécommunication (40) selon la revendication 17 ou 18, **caractérisé en ce que** les stations de base (Noeud B₁, Noeud B₂) sont réalisées de telle sorte qu'elles utilisent les informations relatives au facteur de qualité de la liaison radio pour la sélection du au moins un autre canal (B ; A) à partir du nombre choisi de canaux (A, B).

20. Système de radiotélécommunication (40) selon l'une quelconque des revendications 17 à 19, **caractérisé en ce que** les stations de base (Noeud B₁, Noeud B₂) sont réalisées de telle sorte qu'elles utilisent les informations relatives au facteur de qualité des liaisons radio pour la sélection de la séquence des autres canaux (B ; A) à partir du nombre choisi de canaux (A, B).

21. Système de radiotélécommunication (40) selon l'une quelconque des revendications 17 à 20, **caractérisé en ce que** les stations de base (Noeud B₁, Noeud B₂) sont réalisées de telle sorte qu'elles utilisent les informations relatives au facteur de qualité des liaisons radio pour la sélection du moment d'une transition vers un autre canal (B ; A).

22. Système de radiotélécommunication (40) selon l'une quelconque des revendications 17 à 21, **caractérisé en ce que** les stations de base (Noeud B₁, Noeud B₂) sont réalisées de telle sorte qu'elles utilisent les informations relatives au facteur de qualité des liaisons radio pour la sélection du moment d'une interruption de la méthode.
